(19)

Europäisches
Patentamt
European
Patent Office
Office européen
des brevets

(11) **EP 4 239 975 A1**

(12) **EUROPEAN PATENT APPLICATION**
published in accordance with Art. 153(4) EPC

(43) Date of publication:
**06.09.2023 Bulletin 2023/36**

(21) Application number: **21893833.0**

(22) Date of filing: **12.11.2021**

(51) International Patent Classification (IPC):
**H04L 47/22** (2022.01)          **H04L 47/56** (2022.01)

(52) Cooperative Patent Classification (CPC):
**H04L 47/22; H04L 47/56; H04L 47/6275**

(86) International application number:
**PCT/CN2021/130315**

(87) International publication number:
**WO 2022/105686 (27.05.2022 Gazette 2022/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.11.2020   CN 202011287339**

(71) Applicant: **Huawei Technologies Co., Ltd.
Shenzhen, Guangdong 518129 (CN)**

(72) Inventors:
• **REN, Shoushou
Shenzhen, Guangdong 518129 (CN)**
• **WANG, Chuang
Shenzhen, Guangdong 518129 (CN)**
• **LIU, Bingyang
Shenzhen, Guangdong 518129 (CN)**
• **MENG, Rui
Shenzhen, Guangdong 518129 (CN)**

(74) Representative: **Gill Jennings & Every LLP
The Broadgate Tower
20 Primrose Street
London EC2A 2ES (GB)**

(54) **PACKET PROCESSING METHOD AND RELATED APPARATUS**

(57)     A packet processing method is disclosed. The method includes: A first network device receives a first packet from a network at a first moment, where the first packet is a 1st packet in a first burst of a first data flow, the first burst is one of a plurality of bursts included in the first data flow received by the first network device, the first burst includes one or more packets, and the first network device is a first-hop network device that processes one or more packets included in the first data flow. The first network device determines, based on the first moment, a first target queue from a plurality of queues included in a first queuing system of the first network device. The first network device adds the one or more packets included in the first burst to the first target queue in a sequence of the one or more packets included in the first burst. The first network device processes the first target queue according to scheduling rules of the plurality of queues. This achieves zero end-to-end jitter for a packet of a data flow in a network device in a network.

FIG. 4A-1

Processed by Luminess, 75001 PARIS (FR)

**(Cont. next page)**

CONT.
FROM
FIG. 4A-1

CONT.
FROM
FIG. 4A-1

CONT.
FROM
FIG. 4A-1

CONT.
FROM
FIG. 4A-1

CONT.
FROM
FIG. 4A-1

408: Determine a third target queue from a queue system unit of the egress edge device 235

409: Add the one or more packets included in the first burst to the third target queue in the sequence of the one or more packets included in the first burst

410: Send the one or more packets included in the first burst according to a scheduling rule of the third target queue

411: Receive a third packet at a third moment

412: Determine, based on the third moment, a fifth target queue from the plurality of queues included in the queuing system unit of the ingress edge device 231

413: Add one or more packets included in a third burst to the fifth target queue in a sequence of the one or more packets included in the third burst

TO
FIG. 4A-3

TO
FIG. 4A-3

TO
FIG. 4A-3

TO
FIG. 4A-3

TO
FIG. 4A-3

FIG. 4A-2

CONT.
FROM
FIG. 4A-2

CONT.
FROM
FIG. 4A-2

CONT.
FROM
FIG. 4A-2

CONT.
FROM
FIG. 4A-2

CONT.
FROM
FIG. 4A-2

414: Send the one or more packets included in the third burst (the third packet includes fourth time information) according to a scheduling rule of the fifth target queue

415: The one or more packets included in the third burst (the third packet includes fifth time information)

416: The one or more packets included in the third burst (the third packet includes sixth time information)

417: The one or more packets included in the third burst

418: Determine a fourth target queue from the queue system unit of the egress edge device 235

419: Add the one or more packets included in the first burst to the fourth target queue in the sequence of the one or more packets included in the first burst

420: Send the one or more packets included in the first burst according to a scheduling rule of the fourth target queue

FIG. 4A-3

**Description**

This application claims priority to Chinese Patent Application No. 202011287339.6, filed with the China National Intellectual Property Administration on November 17, 2020 and entitled "PACKET PROCESSING METHOD AND RELATED APPARATUS", which is incorporated herein by reference in its entirety.

**TECHNICAL FIELD**

This application relates to the field of communication technologies, and in particular, to a packet processing method and a related apparatus.

**BACKGROUND**

Latency determinism means that, for any packet in a data flow, an end-to-end latency experienced by the packet in a network does not exceed a value, in other words, the network ensures a deterministic latency upper bound for the data flow. Latency determinism indicates whether a network has a capability of delivering a packet "in time". Jitter of a data flow is a difference between a latency upper bound and a latency lower bound that a packet in the data flow may experience. Jitter determinism specifies both a latency upper bound and a latency lower bound of a packet in a data flow, and indicates whether a network can deliver the packet "on time", to be specific, neither extremely early nor late.

In a plurality of industrial control scenarios, a controller needs to remotely control a robotic arm to complete a plurality of fine operations. A latency between the controller and the robotic arm needs to be less than 1 ms (millisecond), and jitter needs to be less than 1 μs (microsecond), or even to be zero μs. A current scheduling method (for example, a damper model-based solution or a cyclic queuing and forwarding (cyclic queuing and forwarding) solution) can achieve an end-to-end deterministic latency; but jitter of the current scheduling method is still large, and cannot meet a requirement of extremely low jitter of this type of service.

**SUMMARY**

Embodiments of this application provide a packet processing method and a related apparatus, to ensure a deterministic latency upper bound and zero end-to-end jitter of a packet.

A first aspect of embodiments of this application provides a packet processing method. The packet processing method includes the following steps.

A first network device receives a first packet from a network at a first moment, where the first packet is a 1st packet in a first burst of a first data flow, the first burst is one of a plurality of bursts included in the first data flow received by the first network device, the first burst includes one or more packets, and the first network device is a first-hop network device that processes one or more packets included in the first data flow. Then, the first network device determines, based on the first moment, a first target queue from a plurality of queues included in a first queuing system. The first network device adds the one or more packets included in the first burst to the first target queue in a sequence of the one or more packets included in the first burst. The first network device processes the first target queue according to scheduling rules of the plurality of queues.

In this embodiment, the first network device determines the first target queue at the first moment at which the 1st packet in the first burst is received, and the first network device sequentially adds the one or more packets included in the first burst to the first target queue in an enqueuing manner in which a burst serves as a granularity. A last-hop network device that processes the one or more packets included in the first burst can determine a corresponding third target queue, and then sequentially add the one or more packets included in the first burst to the third target queue. To be specific, enqueuing and scheduling are performed by using mapping between the first target queue and the third target queue between the first-hop network device and the last-hop network device. This ensures that a shape of a data flow entering the network device is the same as a shape of the data flow leaving the network device, thereby ensuring a deterministic latency upper bound and zero end-to-end jitter of a packet.

In a possible implementation, first time intervals between start moments of two adjacent queues of the plurality of queues included in the first queuing system are equal.

In this implementation, the first time intervals between the start moments of two adjacent queues in the first queuing system are equal, so that a time interval at which two adjacent bursts in each data flow arrive at the first network device is configured to be equal to an integral multiple of a gating control granularity. This provides a basis for implementing the solution, thereby ensuring a deterministic latency upper bound and zero end-to-end jitter of a packet.

In another possible implementation, second time intervals at which two adjacent bursts of the plurality of bursts included in the first data flow arrive at the first network device are equal, and the second time interval is an integral multiple of the first time interval.

In this implementation, a time interval at which two adjacent bursts in the first data flow arrive at the first network device is equal to an integral multiple of the gating control granularity. This ensures that a shape in which the first data flow enters the first-hop network device is the same as a shape in which the first data flow subsequently leaves the last-hop network device, thereby ensuring a deterministic latency upper bound and zero end-to-end jitter of a packet.

In another possible implementation, quantities of bits of the plurality of bursts included in the first data flow are the same.

In this possible implementation, if a plurality of data flows simultaneously enter the first network device, quantities of bits of bursts included in all the data flows need to be the same. This avoids end-to-end jitter of a packet caused by different latencies when the packet passes through network devices in the network due to different quantities of bits of bursts of the data flows in the last-hop network device.

In another possible implementation, sizes of the packets included in the first burst are the same.

In this possible implementation, the packets included in the first burst have the same size. This can avoid end-to-end jitter of the packets caused by different duration when different packets pass through the network devices in the network due to packet sizes.

In another possible implementation, the method further includes: The first network device receives a second packet from the network at a second moment, where the second packet is a 1st packet in a second burst of a second data flow, the second burst is one of a plurality of bursts included in the second data flow received by the first network device, and the second burst includes one or more packets.

The first network device determines, based on the second moment, a second target queue from the plurality of queues included in the first queuing system.

The second target queue is the first target queue, or the second target queue is after the first target queue; and the first target queue is a last queue of the first queuing system, or the first target queue is before a last queue of the first queuing system.

In this possible implementation, when the first network device receives a plurality of data flows, the first network device can still determine a corresponding target queue based on receiving moments of 1st packets in bursts of different data flows, and add the bursts to the target queue. Two bursts of different data flows can be added to a same target queue.

In another possible implementation, third time intervals at which two adjacent bursts of the plurality of bursts included in the second data flow arrive at the first network device are equal, and the third time interval is an integral multiple of the first time interval.

In this possible implementation, a time interval at which two adjacent bursts in the second data flow arrive at the first network device is equal to an integral multiple of the gating control granularity. This ensures that a shape in which the second data flow enters the first-hop network device is the same as a shape in which the second data flow subsequently leaves the last-hop network device, thereby ensuring a deterministic latency upper bound and zero end-to-end jitter of a packet.

In another possible implementation, packets included in N bursts are added to the first target queue, the N bursts include the first burst, each of the N bursts corresponds to one data flow, different bursts in the N bursts correspond to different data flows, and quantities of bits of the N bursts are less than a quantity of bits that can be accommodated by the first target queue. The quantity of bits that can be accommodated by the first target queue is equal to a product obtained by multiplying a port rate of the first network device by a time interval between a start moment of the first target queue and an end moment of the first target queue.

In this possible implementation, the packets in the N bursts can be added to the first target queue, and the quantities of bits of the N bursts are less than the quantity of bits that can be accommodated by the first target queue. Therefore, this ensures that the packets in the N bursts are sent totally in the time interval between the start moment and the end moment of the first target queue, and avoids affecting sending of a packet in another target queue, thereby ensuring a deterministic latency and zero end-to-end jitter of the packet.

In another possible implementation, the first packet includes queue information of the first target queue; or the one or more packets included in the first burst each include queue information of the first target queue.

In this possible implementation, the first packet or each packet in the first burst carries the queue information of the first target queue, so that the last-hop network device determines, based on the queue information, a target queue corresponding to the first target queue, and implements enqueuing and scheduling by using mapping between the first target queue and the third target queue between the first-hop network device and the last-hop network device, to ensure a deterministic latency upper bound and zero end-to-end jitter of a packet.

In another possible implementation, the queue information of the first target queue includes a queue number of the first target queue.

In this possible implementation, it is shown that the queue information of the first target queue is represented in a form of a queue number.

In another possible implementation, the one or more packets included in the first burst each further include a number of a queue group to which a queue used to indicate a second network device to join the one or more packets included in the first burst belongs, and the second network device is the last-hop network device that processes the one or more packets included in the first data flow.

In this possible implementation, to ensure that end-to-end jitter of a packet in network devices in a network is zero, when the first network device receives a plurality of data flows and bursts of different data flows in the plurality of data flows fall into a same target queue in the first queuing system of the first network device, the first network device can carry the number of the queue group to which the queue used to indicate the second network device to join the one or more packets included in the first burst belongs. Because each queue group corresponds to one priority, and different queue groups correspond to different priorities, the last-hop network device determines a corresponding queue group based on the number of the queue group to which the queue used to indicate the one or more packets included in the first burst belongs, and processes the queue group by using a scheduling rule of the queue group, to avoid mutual extrusion between different data flows, and ensure a deterministic latency upper bound and zero end-to-end jitter of a packet.

In another possible implementation, each of the one or more packets included in the first burst includes first time information of each packet, the first time information indicates first remaining processing duration for each packet, the first remaining processing duration is a difference between a first theoretical upper limit of duration for processing each packet by the first network device and first actual duration. The first theoretical upper limit of duration is a theoretical upper limit of duration when each packet passes through the network devices from a first reference moment to a second reference moment. The first reference moment is a reference moment at which the first network device releases each packet to the first queuing system, or the first reference moment is a moment at which the first network device receives each packet. The second reference moment is a reference moment at which each packet enters a queuing system of the second network device that processes the one or more packets included in the first burst. The first actual duration is actual duration when each packet passes through the first network device from the first reference moment to a moment at which each packet is output from the first network device.

In this possible implementation, in a damper-model-based solution, each packet in the first burst can carry the first time information of each packet, so that a second network device that processes the first data flow determines a reference moment at which each packet is in the second network device that processes the first data flow, and selects a corresponding target queue for each packet based on the reference moment.

In another possible implementation, the first time information includes a first reference moment of each packet and a moment at which each packet is output from the first network device.

In this possible implementation, the first time information can specifically include the first reference moment at which each packet is in the first network device and the moment at which each packet is output from the first network device, so that the second network device that processes the first data flow in the network determines a reference moment at which each packet is in the second network device that processes the first data flow, and selects a corresponding target queue for each packet based on the reference moment.

In another possible implementation, the first time information further includes a first theoretical upper limit of duration for each packet.

In this possible implementation, the first time information further includes the first theoretical upper limit of duration for each packet, so that the second network device that processes the first data flow in the network determines a reference moment at which each packet is in the second network device that processes the first data flow.

In another possible implementation, the first packet includes first time information of the first packet, the first time information indicates first remaining processing duration for the first packet, the first remaining processing duration is a difference between a first theoretical upper limit of duration for processing the first packet by the first network device and first actual duration. The first theoretical upper limit of duration is a theoretical upper limit of duration when the first packet passes through the network devices from a first reference moment to a second reference moment. The first reference moment is a reference moment at which the first network device releases the first packet to the first queuing system, and the second reference moment is a reference moment at which the first packet enters a queuing system of the second network device that processes the one or more packets included in the first burst.

In this possible implementation, an intermediate node that processes the first data flow can add the burst of the first data flow to a corresponding target queue at a burst granularity. Therefore, the first network device can add the first time information of the first packet to the 1st packet in the first burst, and the second network device that processes the first data flow in the network can determine, based on the first time information of the first packet, the target queue corresponding to the first burst, and add the first burst to the target queue, to reduce packet transmission overheads.

In another possible implementation, the first time information includes a first reference moment of the first packet and a moment at which the first packet is output from the first network device.

In this possible implementation, the first time information can specifically include the first reference moment at which the first packet is in the first network device and the moment at which the first packet is output from the first network device, so that the second network device that processes the first data flow in the network determines a reference moment at which the first packet is in the second network device that processes the first data flow, and selects a corresponding target queue for the first burst based on the reference moment.

In another possible implementation, the first time information further includes a first theoretical upper limit of duration for the first packet.

In this possible implementation, the first time information further includes the first theoretical upper limit of duration for the first packet, so that the second network device that processes the first data flow in the network determines a reference moment at which the first packet is in the second network device that processes the first data flow, and selects a corresponding target queue for the first burst based on the reference moment.

A second aspect of embodiments of this application provides a packet processing method. The packet processing method includes the following steps.

A second network device receives a first data flow, where the first data flow includes one or more bursts, a first burst of the bursts includes one or more packets, a third burst of the bursts includes one or more packets, the first burst and the third burst are two adjacent bursts in the first data flow, and the second network device is a last-hop network device that processes one or more packets included in the first data flow. Then, the second network device determines a third target queue and a fourth target queue from a second queuing system of the second network device. The second network device adds the one or more packets included in the first burst to the third target queue in a sequence of the one or more packets included in the first burst. The second network device adds the one or more packets included in the third burst to the fourth target queue in a sequence of the one or more packets included in the third burst. The second network device processes the third target queue and the fourth target queue according to a scheduling rule of the third target queue and a scheduling rule of the fourth target queue.

In this embodiment, the second network device adds the first burst and the third burst of the first data flow to the third target queue and the fourth target queue in an enqueuing manner in which a burst serves as a granularity. The third target queue corresponds to a first target queue to which the first burst in a first network device is added, and the fourth target queue corresponds to a target queue to which the third burst in the first network device is added. To be specific, enqueuing and scheduling are performed by using mapping between the first target queue and the third target queue between a first-hop network device and the last-hop network device. This ensures that a shape of a data flow entering the network device is the same as a shape of the data flow leaving the network device, thereby ensuring a deterministic latency upper bound and zero end-to-end jitter of a packet.

In a possible implementation, the third target queue and the fourth target queue are two adjacent or non-adjacent queues in the second queuing system.

In this possible implementation, target queues to which two adjacent bursts of a same data flow are added on the last-hop network device may be two adjacent queues, or may be two non-adjacent queues. This needs to be specifically determined by a manner in which the first-hop network device maps the burst of the data flow to the target queue and a time interval at which the two adjacent bursts of the data flow arrive at the first-hop network device.

In another possible implementation, a time interval between a moment at which the second network device releases the one or more packets included in the first burst to the second queuing system and a moment at which the second network device releases the one or more packets included in the third burst to the second queuing system is a fourth time interval, a time interval between a start moment of the third target queue and a start moment of the fourth target queue is a fifth time interval, and the fourth time interval is equal to the fifth time interval.

In this possible implementation, the fourth time interval is equal to the fifth time interval, to implement a deterministic latency and zero end-to-end jitter of a packet.

In another possible implementation, the method further includes: The second network device receives a second data flow, where the second data flow includes one or more bursts, a second burst of the bursts includes one or more packets, and a moment at which the second data flow arrives at the second network device is later than a moment at which a 1st burst of the first data flow arrives at the second network device, and is earlier than a moment at which a last burst of the first data flow arrives at the second network device. The second network device selects a first queue group from the second queuing system, and adds the one or more bursts included in the first data flow to the first queue group in a sequence of the one or more bursts included in the first data flow. The second network device selects a second queue group from the second queuing system, and adds the one or more bursts included in the second data flow to the second queue group in a sequence of the one or more bursts included in the second data flow. A priority of the first queue group is higher than a priority of the second queue group. The second network device processes the first queue group and the second queue group according to scheduling rules of a plurality of queues in the second queuing system.

In this possible implementation, when the second network device receives a plurality of data flows, and bursts of different data flows are mapped to a same target queue, the second network device can map the different data flows to different queue groups respectively. Each queue group corresponds to one priority, and the different queue groups correspond to different priorities. This avoids mutual extrusion between different data flows is avoided, and ensures a deterministic latency upper bound and zero end-to-end jitter of a packet.

In another possible implementation, that the second network device determines a third target queue from a second queuing system of the second network device includes: The second network device determines a first target queue, where the first target queue is a queue to which the one or more packets included in the first burst in a first network device are added, and the first network device is a first-hop network device that processes the one or more packets included in the first data flow. Then, the second network device determines, from the second queuing system based on a first mapping relationship, the third target queue corresponding to the first target queue, where the first mapping relationship includes a mapping relationship between a queue in a first queuing system of the first network device and a queue in the second queuing system.

In this possible implementation, the second network device can determine, based on the mapping relationship between the queue in the first queuing system and the queue in the second queuing system, the third target queue corresponding to the first target queue. In this way, enqueuing and scheduling are performed by using the mapping between the first target queue and the third target queue between the first-hop network device and the last-hop network device, to ensure a deterministic latency upper bound and zero end-to-end jitter of a packet.

In another possible implementation, a 1st packet in the first burst includes queue information of the first target queue. That the second network device determines a first target queue includes: The second network device determines the first target queue based on the queue information of the first target queue.

In this possible implementation, the second network device can determine, based on the queue information that is of the first target queue and that is carried in the 1st packet in the first burst, the first target queue to which the first burst in the first network device is added, so that the second network device determines the third target queue corresponding to the first target queue.

In another possible implementation, packets included in N bursts are added to the third target queue, the N bursts include the first burst, each of the N bursts corresponds to one data flow, and different bursts in the N bursts correspond to different data flows. The N bursts correspond to N queue groups, each of the N queue groups corresponds to one priority, and priorities of different queue groups are different.

In this possible implementation, when bursts of a plurality of data flows simultaneously fall into a same target queue, a burst of each data flow needs to be allocated to a corresponding queue group, and then each queue group is processed by using a scheduling rule of each queue group. This avoids a transmission conflict between the bursts of the plurality of data flows, thereby ensuring a deterministic latency upper bound and zero end-to-end jitter of a packet.

In another possible implementation, quantities of bits of the bursts included in the first data flow are the same.

In this possible implementation, if a plurality of data flows simultaneously enter the first network device, quantities of bits of bursts included in all the data flows need to be the same. This avoids end-to-end jitter of a packet caused by different latencies when the packet passes through network devices in the network due to different quantities of bits of bursts of the data flows in the last-hop network device.

In another possible implementation, sizes of the packets included in the first burst are the same.

In this possible implementation, the packets included in the first burst have the same size. This can avoid end-to-end jitter of the packets caused by different duration when different packets pass through the network devices in the network due to packet sizes.

A third aspect of embodiments of this application provides a first network device. The first network device includes:

a receiving unit, configured to receive a first packet from a network at a first moment, where the first packet is a 1st packet in a first burst of a first data flow, the first burst is one of a plurality of bursts included in the first data flow received by the first network device, the first burst includes one or more packets, and the first network device is a first-hop network device that processes one or more packets included in the first data flow;

a processing unit, configured to: determine, based on the first moment, a first target queue from a plurality of queues included in a first queuing system; and add the one or more packets included in the first burst to the first target queue in a sequence of the one or more packets included in the first burst; and

a sending unit, configured to process the first target queue according to scheduling rules of the plurality of queues.

In a possible implementation, first time intervals between start moments of two adjacent queues of the plurality of queues included in the first queuing system are equal.

In another possible implementation, second time intervals at which two adjacent bursts of the plurality of bursts included in the first data flow arrive at the first network device are equal, and the second time interval is an integral multiple of the first time interval.

In another possible implementation, quantities of bits of the plurality of bursts included in the first data flow are the same.

In another possible implementation, sizes of the packets included in the first burst are the same.

In another possible implementation, the receiving unit is further configured to:
receive a second packet from the network at a second moment, where the second packet is a 1st packet in a second burst of a second data flow, the second burst is one of a plurality of bursts included in the second data flow received by the first network device, and the second burst includes one or more packets.

The processing unit is further configured to:

determine, based on the second moment, a second target queue from the plurality of queues included in the first queuing system.

The second target queue is the first target queue, or the second target queue is after the first target queue; and the first target queue is a last queue of the first queuing system, or the first target queue is before a last queue of the first queuing system.

In another possible implementation, third time intervals at which two adjacent bursts of the plurality of bursts included in the second data flow arrive at the first network device are equal, and the third time interval is an integral multiple of the first time interval.

In another possible implementation, packets included in N bursts are added to the first target queue, the N bursts include the first burst, each of the N bursts corresponds to one data flow, different bursts in the N bursts correspond to different data flows, and quantities of bits of the N bursts are less than a quantity of bits that can be accommodated by the first target queue. The quantity of bits that can be accommodated by the first target queue is equal to a product obtained by multiplying a port rate of the first network device by a time interval between a start moment of the first target queue and an end moment of the first target queue.

In another possible implementation, the first packet includes queue information of the first target queue; or the one or more packets included in the first burst each include queue information of the first target queue.

In another possible implementation, the queue information of the first target queue includes a queue number of the first target queue.

In another possible implementation, the one or more packets included in the first burst each further include a number of a queue group to which a queue used to indicate a second network device to join the one or more packets included in the first burst belongs, and the second network device is the last-hop network device that processes the one or more packets included in the first data flow.

In another possible implementation, each of the one or more packets included in the first burst includes first time information of each packet, the first time information indicates first remaining processing duration for each packet, the first remaining processing duration is a difference between a first theoretical upper limit of duration for processing each packet by the first network device and first actual duration. The first theoretical upper limit of duration is a theoretical upper limit of duration when each packet passes through the network devices from a first reference moment to a second reference moment. The first reference moment is a reference moment at which the first network device releases each packet to the first queuing system, or the first reference moment is a moment at which the first network device receives each packet. The second reference moment is a reference moment at which each packet enters a queuing system of the second network device that processes the one or more packets included in the first burst. The first actual duration is actual duration when each packet passes through the first network device from the first reference moment to a moment at which each packet is output from the first network device.

In another possible implementation, the first time information includes a first reference moment of each packet and a moment at which each packet is output from the first network device.

In another possible implementation, the first time information further includes a first theoretical upper limit of duration for each packet.

In another possible implementation, the first packet includes first time information of the first packet, the first time information indicates first remaining processing duration for the first packet, the first remaining processing duration is a difference between a first theoretical upper limit of duration for processing the first packet by the first network device and first actual duration. The first theoretical upper limit of duration is a theoretical upper limit of duration when the first packet passes through the network devices from a first reference moment to a second reference moment. The first reference moment is a reference moment at which the first network device releases the first packet to the first queuing system, and the second reference moment is a reference moment at which the first packet enters a queuing system of the second network device that processes the one or more packets included in the first burst.

In another possible implementation, the first time information includes a first reference moment of the first packet and a moment at which the first packet is output from the first network device.

In another possible implementation, the first time information further includes a first theoretical upper limit of duration for the first packet.

A fourth aspect of embodiments of this application provides a second network device. The second network device includes:

a receiving unit, configured to receive a first data flow, where the first data flow includes one or more bursts, a first burst of the bursts includes one or more packets, a third burst of the bursts includes one or more packets, the first burst and the third burst are two adjacent bursts in the first data flow, and the second network device is a last-hop network device that processes one or more packets included in the first data flow;

8

a processing unit, configured to: determine a third target queue and a fourth target queue from a second queuing system of the second network device; add the one or more packets included in the first burst to the third target queue in a sequence of the one or more packets included in the first burst; and add the one or more packets included in the third burst to the fourth target queue in a sequence of the one or more packets included in the third burst; and a sending unit, configured to process the third target queue and the fourth target queue according to a scheduling rule of the third target queue and a scheduling rule of the fourth target queue.

In a possible implementation, the third target queue and the fourth target queue are two adjacent or non-adjacent queues in the second queuing system.

In another possible implementation, a time interval between a moment at which the second network device releases the one or more packets included in the first burst to the second queuing system and a moment at which the second network device releases the one or more packets included in the third burst to the second queuing system is a fourth time interval, a time interval between a start moment of the third target queue and a start moment of the fourth target queue is a fifth time interval, and the fourth time interval is equal to the fifth time interval.

In another possible implementation, the receiving unit is further configured to:
receive a second data flow, where the second data flow includes one or more bursts, a second burst of the bursts includes one or more packets, and a moment at which the second data flow arrives at the second network device is later than a moment at which a 1st burst of the first data flow arrives at the second network device, and is earlier than a moment at which a last burst of the first data flow arrives at the second network device.

The processing unit is further configured to:
select a first queue group from the second queuing system, and add the one or more bursts included in the first data flow to the first queue group in a sequence of the one or more bursts included in the first data flow; and select a second queue group from the second queuing system, and add the one or more bursts included in the second data flow to the second queue group in a sequence of the one or more bursts included in the second data flow, where a priority of the first queue group is higher than a priority of the second queue group.

The sending unit is further configured to:
process the first queue group and the second queue group according to scheduling rules of a plurality of queues in the second queuing system.

In another possible implementation, the processing unit is specifically configured to:

determine a first target queue, where the first target queue is a queue to which the one or more packets included in the first burst in a first network device are added, and the first network device is a first-hop network device that processes the one or more packets included in the first data flow; and

determine, from the second queuing system based on a first mapping relationship, the third target queue corresponding to the first target queue, where the first mapping relationship includes a mapping relationship between a queue in a first queuing system of the first network device and a queue in the second queuing system.

In another possible implementation, a 1st packet in the first burst includes queue information of the first target queue. The processing unit is specifically configured to:
determine the first target queue based on the queue information of the first target queue.

In another possible implementation, packets included in N bursts are added to the third target queue, the N bursts include the first burst, each of the N bursts corresponds to one data flow, and different bursts in the N bursts correspond to different data flows. The N bursts correspond to N queue groups, each of the N queue groups corresponds to one priority, and priorities of different queue groups are different.

In another possible implementation, quantities of bits of the bursts included in the first data flow are the same.

In another possible implementation, sizes of the packets included in the first burst are the same.

A fifth aspect of embodiments of this application provides a network device. The network device includes a processor, configured to execute a program stored in a memory, and when the program is executed, the network device is enabled to perform the method according to any one of the first aspect or the possible implementations of the first aspect.

In a possible implementation, the memory is located outside the network device.

A sixth aspect of embodiments of this application provides a network device. The network device includes a processor, configured to execute a program stored in a memory, and when the program is executed, the network device is enabled to perform the method according to any one of the second aspect or the possible designs of the second aspect.

In a possible implementation, the memory is located outside the network device.

A seventh aspect of embodiments of this application provides a computer-readable storage medium, including computer instructions. When the computer instructions are run on a computer, the computer is enabled to perform the method according to any one of the possible designs in the first aspect and the second aspect.

An eighth aspect of embodiments of this application provides a computer program product including computer instructions. When the computer program product runs on a computer, the computer is enabled to perform the method according to any one of the possible designs in the first aspect and the second aspect.

A ninth aspect of embodiments of this application provides a network device. The network device includes a processor, a memory, and computer instructions that are stored in the memory and that can be run on the processor. When the computer instructions are run, the network device is enabled to perform the method according to any one of the first aspect or the possible designs of the first aspect.

A tenth aspect of embodiments of this application provides a network device. The network device includes a processor, a memory, and computer instructions that are stored in the memory and that can be run on the processor. When the computer instructions are run, the network device is enabled to perform the method according to any one of the second aspect or the possible designs of the second aspect.

An eleventh aspect of embodiments of this application provides a network system. The network system includes the first network device according to the third aspect and the second network device according to the fourth aspect.

According to the foregoing technical solutions, it can be learned that embodiments of this application have the following advantages.

It can be learned from the foregoing technical solutions that the first network device receives the first packet from the network at the first moment, where the first packet is a 1st packet in the first burst of the first data flow, the first burst is one of the plurality of bursts included in the first data flow received by the first network device, the first burst includes the one or more packets, and the first network device is the first-hop network device that processes the one or more packets included in the first data flow. Then, the first network device determines, based on the first moment, the first target queue from the plurality of queues included in the first queuing system, and adds the one or more packets included in the first burst to the first target queue in the sequence of the one or more packets included in the first burst. The first network device processes the first target queue according to the scheduling rules of the plurality of queues. It can be learned that, in the technical solutions in embodiments of this application, the first network device determines the first target queue based on the first moment at which the 1st packet in the first burst is received, and the first network device sequentially adds the one or more packets included in the first burst to the first target queue in the enqueuing manner in which the burst serves as the granularity. The last-hop network device that processes the one or more packets included in the first burst can determine the corresponding third target queue, and then sequentially add the one or more packets included in the first burst to the third target queue. To be specific, enqueuing and scheduling are performed by using the mapping between the first target queue and the third target queue between the first-hop network device and the last-hop network device, to ensure a deterministic latency upper bound and zero end-to-end jitter of a packet.

## BRIEF DESCRIPTION OF DRAWINGS

FIG. 1 is a schematic diagram of a cause of burst accumulation;
FIG. 2 is a schematic diagram of a system to which an embodiment of this application can be applied;
FIG. 3A is a schematic block diagram of a structure of a router that can implement an embodiment of this application;
FIG. 3B is a schematic diagram of start moments of a plurality of queues in a queuing system;
FIG. 4A-1 to FIG. 4A-3 are a schematic diagram of an embodiment of a packet processing method according to an embodiment of this application;

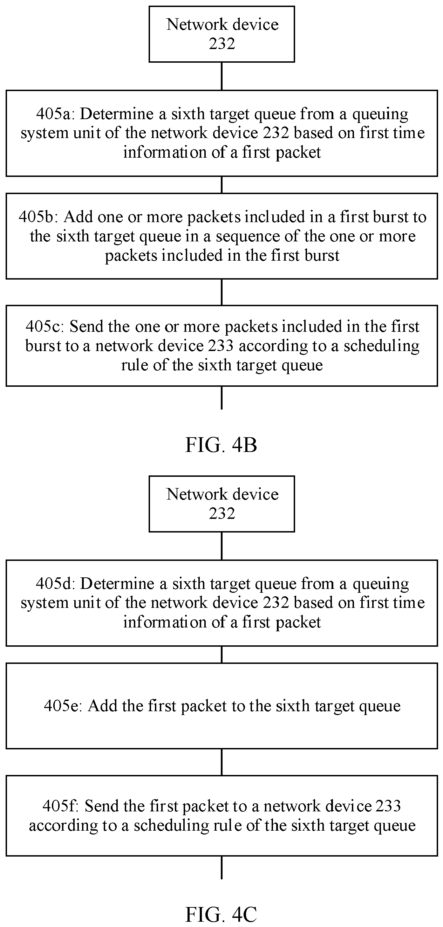

FIG. 4B is a schematic diagram of another embodiment of a packet processing method according to an embodiment of this application;
FIG. 4C is a schematic diagram of still another embodiment of a packet processing method according to an embodiment of this application;

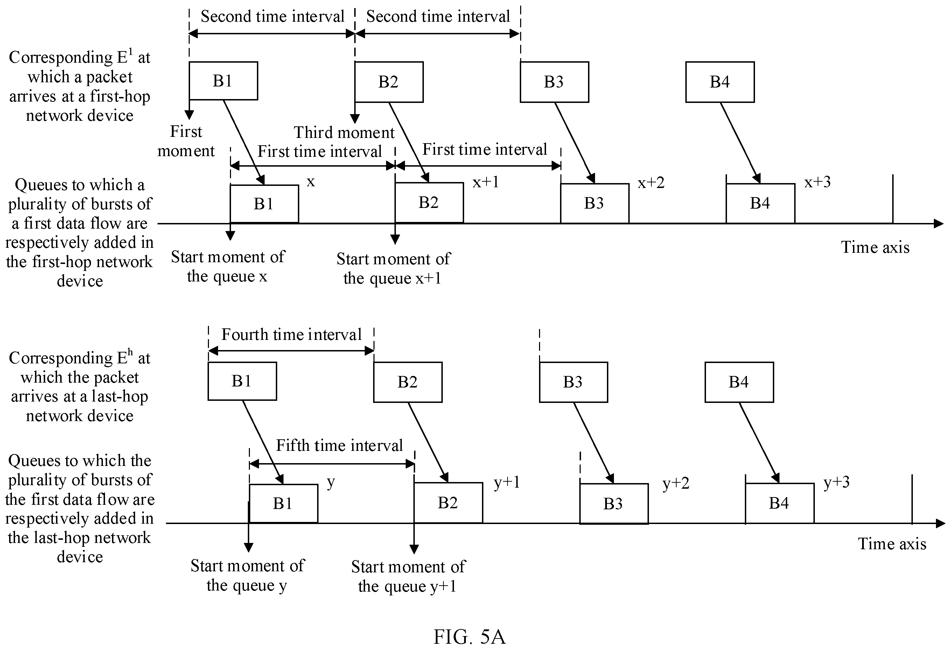

FIG. 5A is a schematic diagram of a scenario in which a first data flow is transmitted between a first-hop network device and a last-hop network device according to an embodiment of this application;

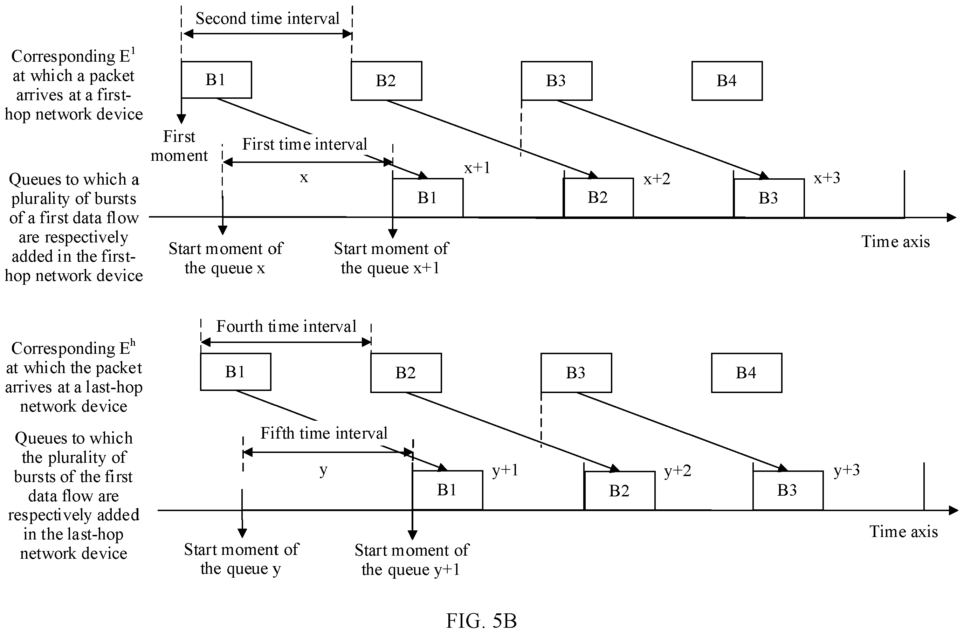

FIG. 5B is a schematic diagram of another scenario in which a first data flow is transmitted between a first-hop network device and a last-hop network device according to an embodiment of this application;

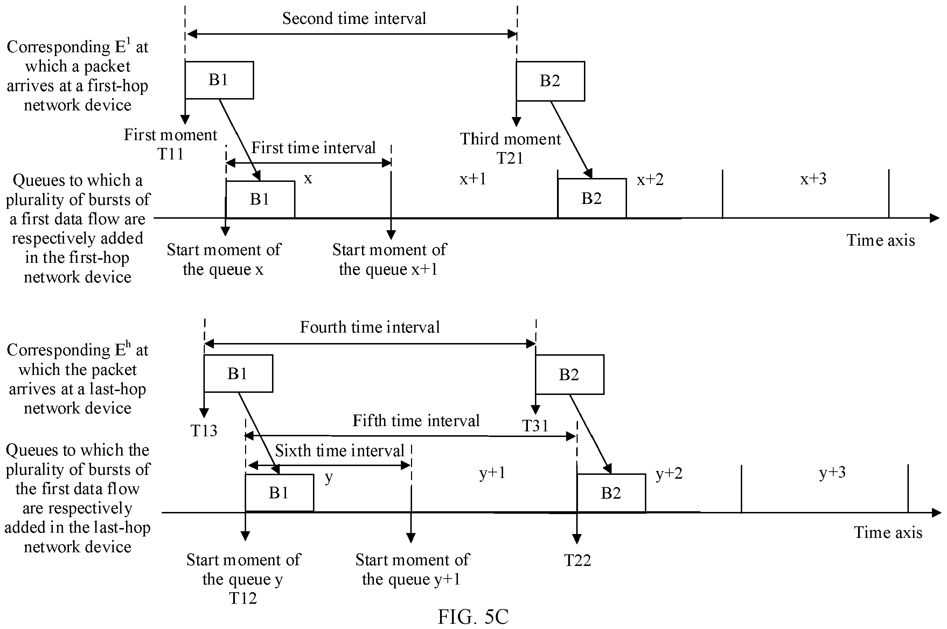

FIG. 5C is a schematic diagram of still another scenario in which a first data flow is transmitted between a first-hop network device and a last-hop network device according to an embodiment of this application;

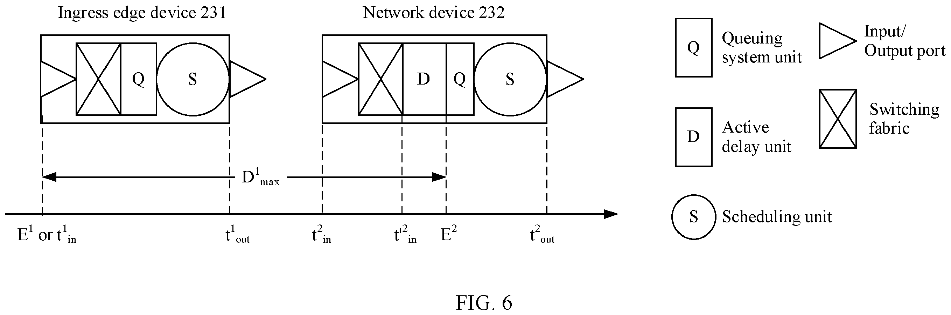

FIG. 6 is a timing diagram of processing a packet by an ingress edge device 231 and a network device 232;

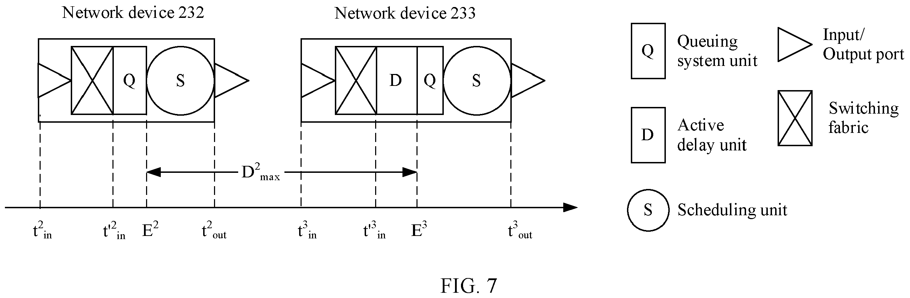

FIG. 7 is a timing diagram of processing a packet by a network device 232 and a network device 233;

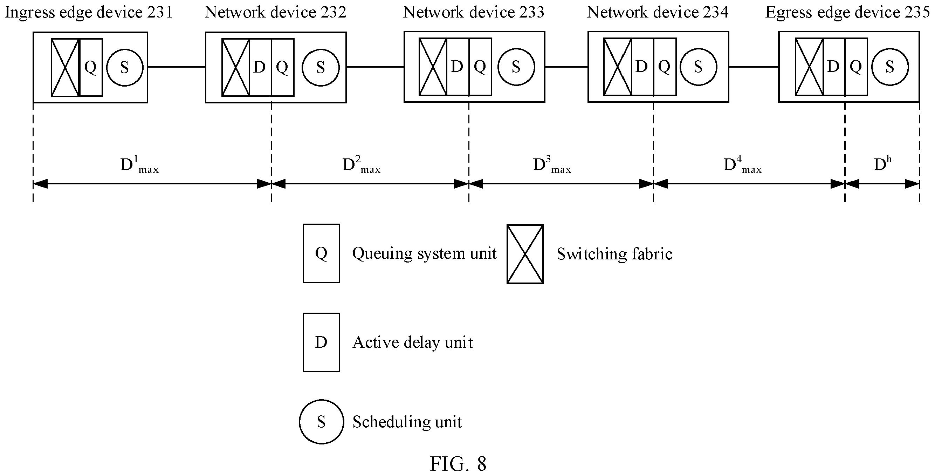

FIG. 8 is a schematic diagram of a deterministic latency of a packet forwarded by a network device according to an embodiment of this application;

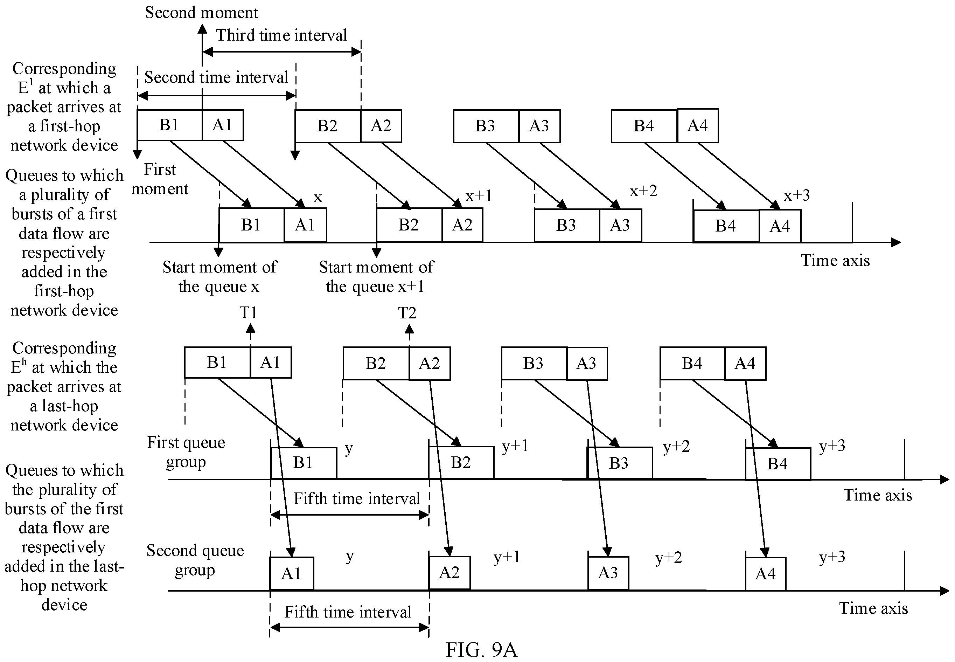

FIG. 9A is a schematic diagram of a scenario in which a first data flow and a second data flow are transmitted between a first-hop network device and a last-hop network device according to an embodiment of this application;

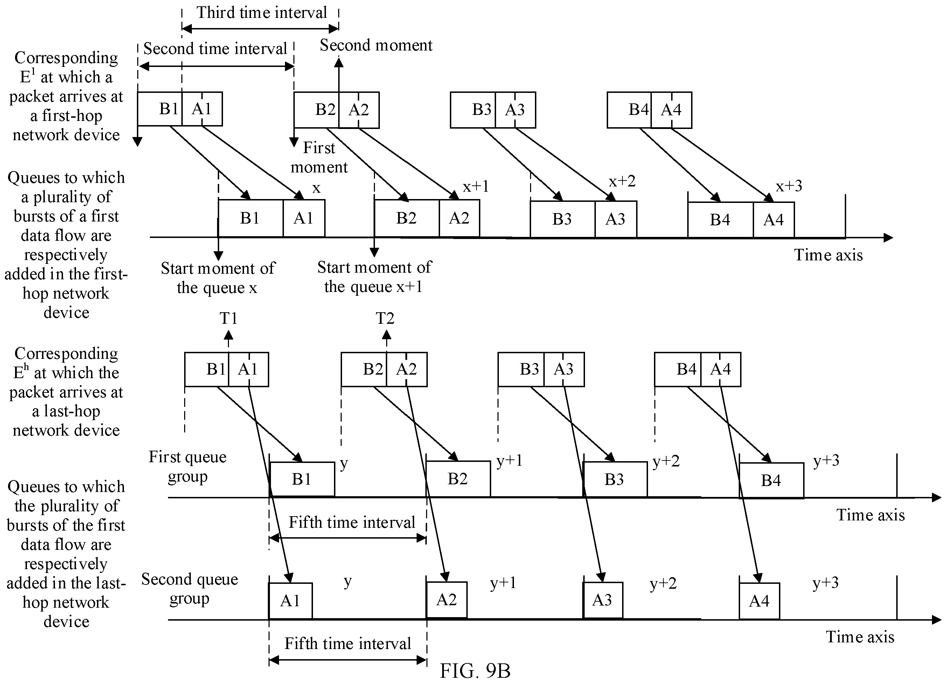

FIG. 9B is a schematic diagram of another scenario in which a first data flow and a second data flow are transmitted between a first-hop network device and a last-hop network device according to an embodiment of this application;

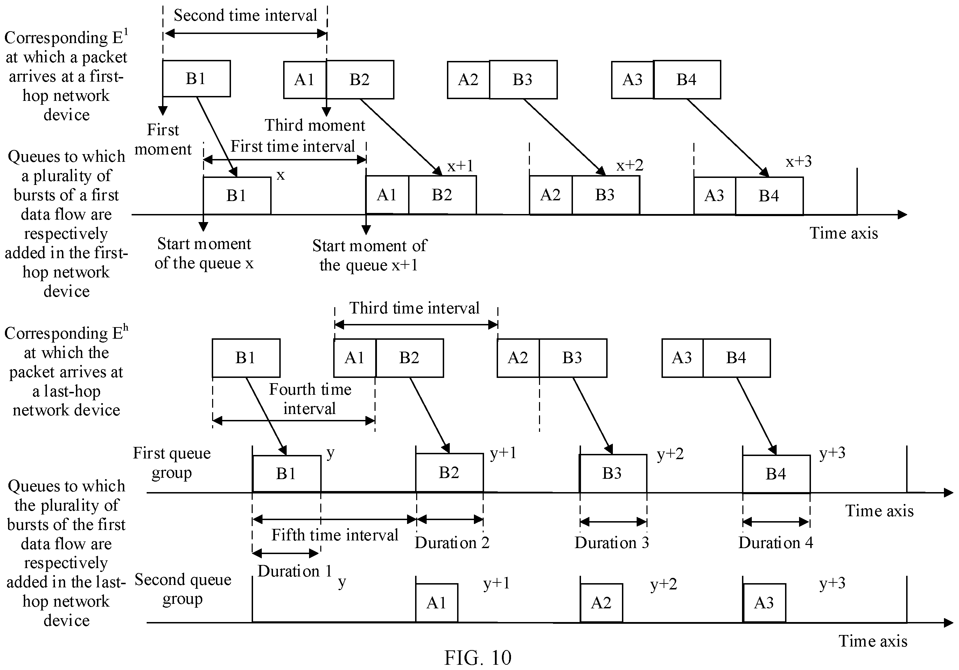

FIG. 10 is a schematic diagram of still another scenario in which a first data flow and a second data flow are transmitted between a first-hop network device and a last-hop network device according to an embodiment of this application;

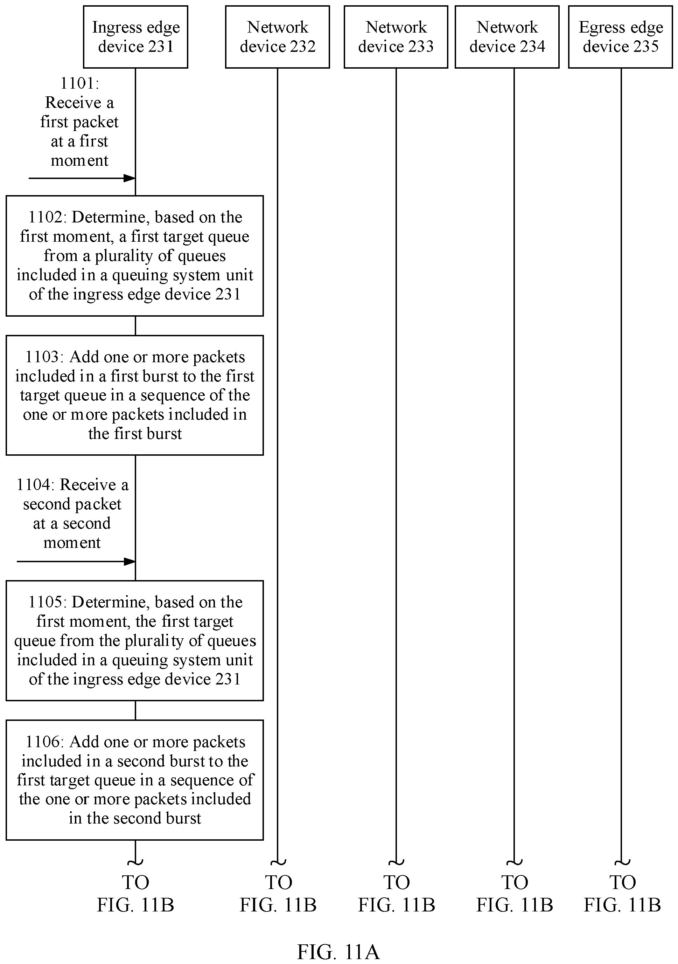

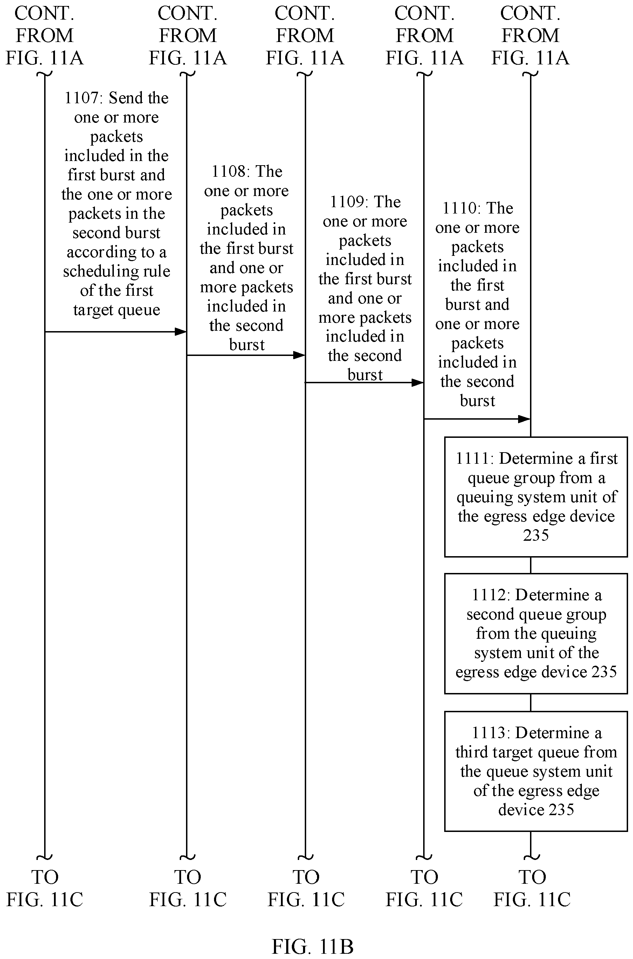

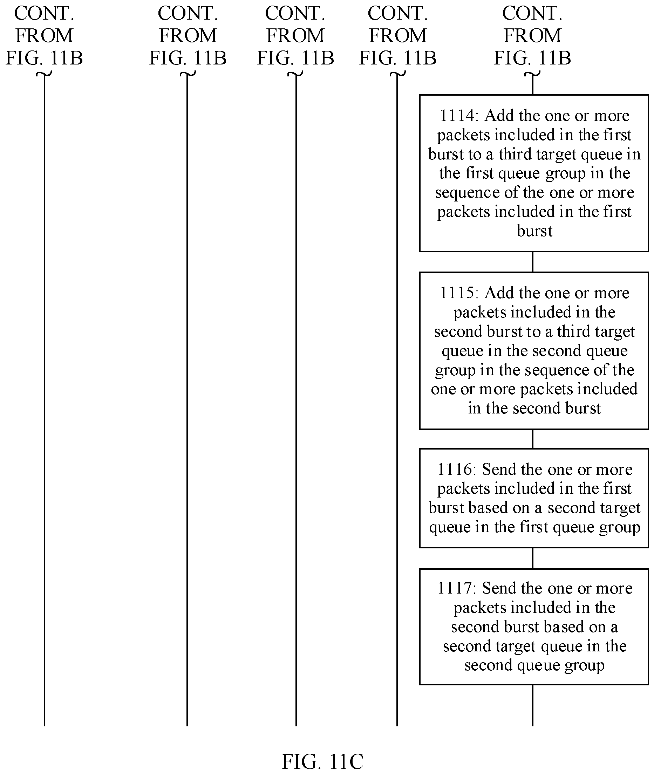

FIG. 11A to FIG. 11C are a schematic diagram of another embodiment of a packet processing method according to an embodiment of this application;

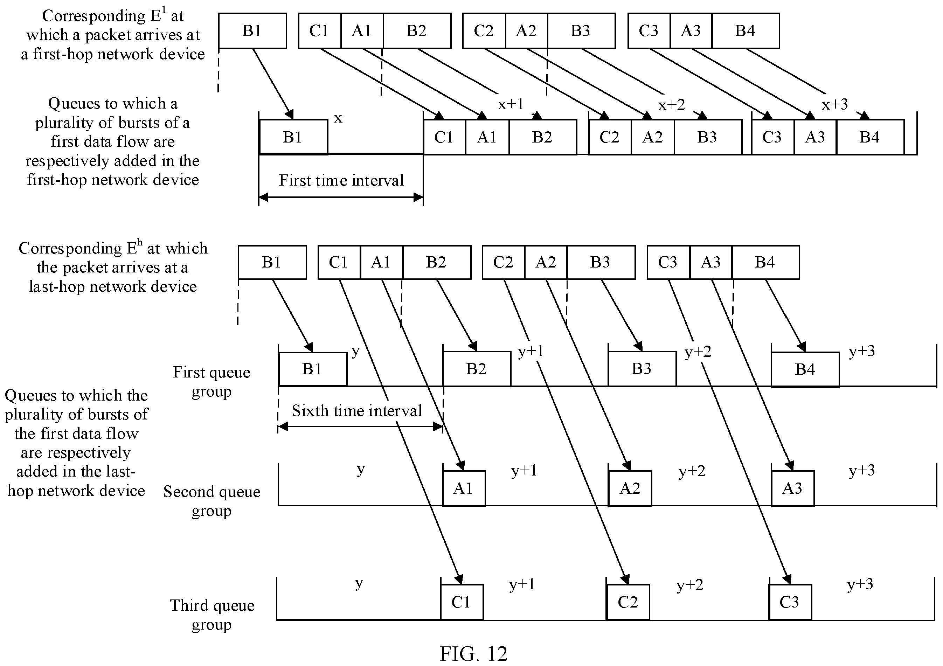

FIG. 12 is a schematic diagram of a scenario in which a first data flow, a second data flow, and a third data flow are transmitted between a first-hop network device and a last-hop network device according to an embodiment of this application;

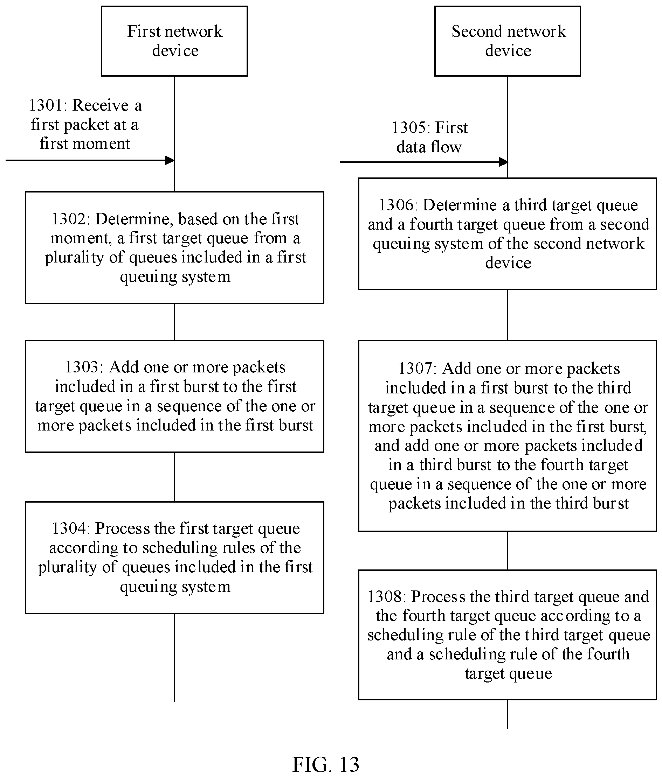

FIG. 13 is a schematic diagram of still another embodiment of a packet processing method according to an embodiment of this application;

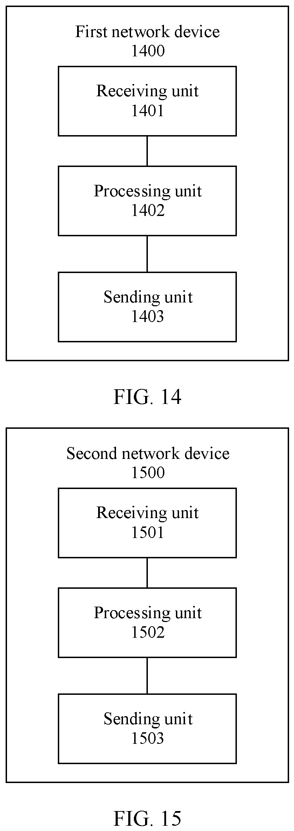

FIG. 14 is a schematic diagram of a structure of a first network device according to an embodiment of this application;

FIG. 15 is a schematic diagram of a structure of a second network device according to an embodiment of this application; and

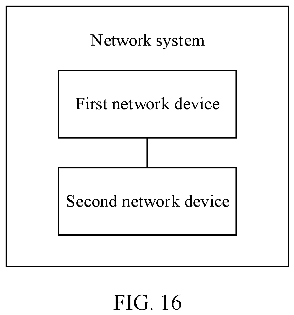

FIG. 16 is a schematic diagram of a network system according to an embodiment of this application.

## DESCRIPTION OF EMBODIMENTS

Embodiments of this application provide a packet processing method and a network device, to ensure a deterministic latency upper bound and zero end-to-end jitter of a packet.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, the terms such as "for example" and "such as" are used to represent giving an example, an illustration, or a description. Any embodiment or design scheme described as an "example" in this application should not be explained as being more preferred or having more advantages than another embodiment or design scheme. Specifically, the term "example" is used to present a concept in a specific manner.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

Reference to "an embodiment", "some embodiments", or the like in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In this application, "at least one" means one or more, and "a plurality of" means two or more. The term "and/or" describes an association relationship for describing associated objects and represents that three relationships may exist. For example, A and/or B may represent the following three cases: Only A exists, both A and B exist, and only B exists. A and B each may be singular or plural. The character "/" generally indicates an "or" relationship between associated objects. "At least one of the following items (pieces)" or a similar expression thereof refers to any combination of these items, including a single item (piece) or any combination of a plurality of items (pieces). For example, at least one of a, b, or c may indicate: a, b, c, a-b, a-c, b-c, or a-b-c, where a, b, and c may be singular or plural.

In an internet protocol (Internet Protocol, IP) network, due to burst accumulation, the internet protocol network cannot provide a deterministic end-to-end latency and jitter for a flow.

The burst accumulation is a root cause of latency nondeterminism. A cause of the burst accumulation is mutual extrusion between different data packets.

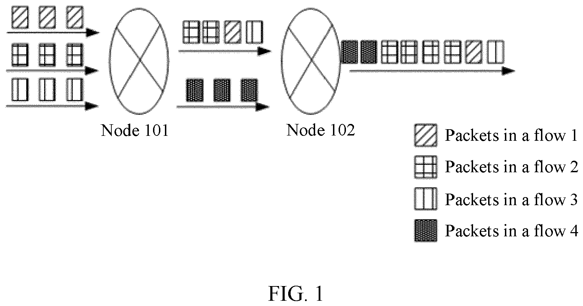

FIG. 1 is a schematic diagram of the cause of the burst accumulation.

As shown in FIG. 1, when simultaneously arriving at a node 101, three flows (a flow 1, a flow 2, and a flow 3) are completely even. Because the node 101 can process packets only at a line rate, the flow 2 is extruded by the other two flows. As a result, two consecutive packets are close to each other, and a burst degree increases. After several cycles of the foregoing process, a flow of a hop forms an unpredictable large burst, and the large burst further extrudes another flow. As a result, a latency of the another flow increases and is unpredictable. Hop-by-hop accumulation of microbursts is a root cause of latency nondeterminism. An existing method for resolving the foregoing problem either depends on time synchronization of devices on an entire network, or has a limitation on a transmission distance; and is difficult to apply to a large-scale IP network.

Therefore, in a transport IP network, a deterministic end-to-end latency and jitter cannot be provided for a flow due to burst accumulation.

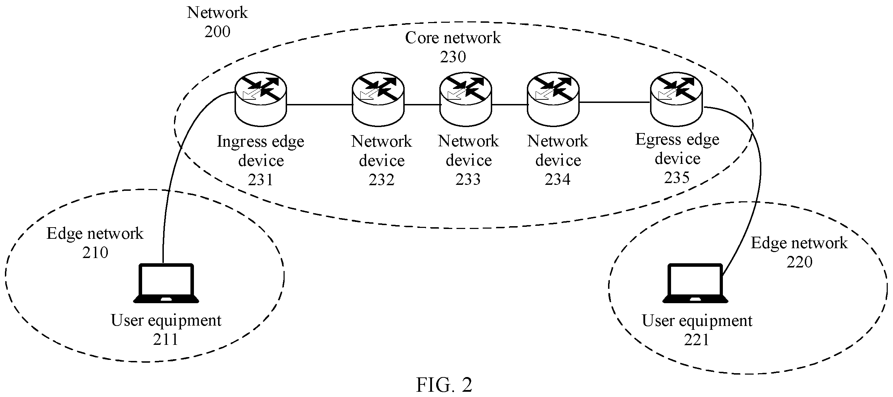

FIG. 2 is a schematic diagram of a system to which embodiments of this application are applied. A network 200 shown in FIG. 2 may include an edge network 210, an edge network 220, and a core network 230.

The edge network 210 includes user equipment 211. The edge network 220 includes user equipment 221. The core network 230 includes an ingress edge (ingress edge) device 231, a network device 232, a network device 233, a network device 234, and an egress edge (egress edge) device 235. As shown in FIG. 2, the user equipment 211 may communicate with the user equipment 221 via the core network.

It should be noted that a device that can implement embodiments of this application may be a router, a switch, or the like.

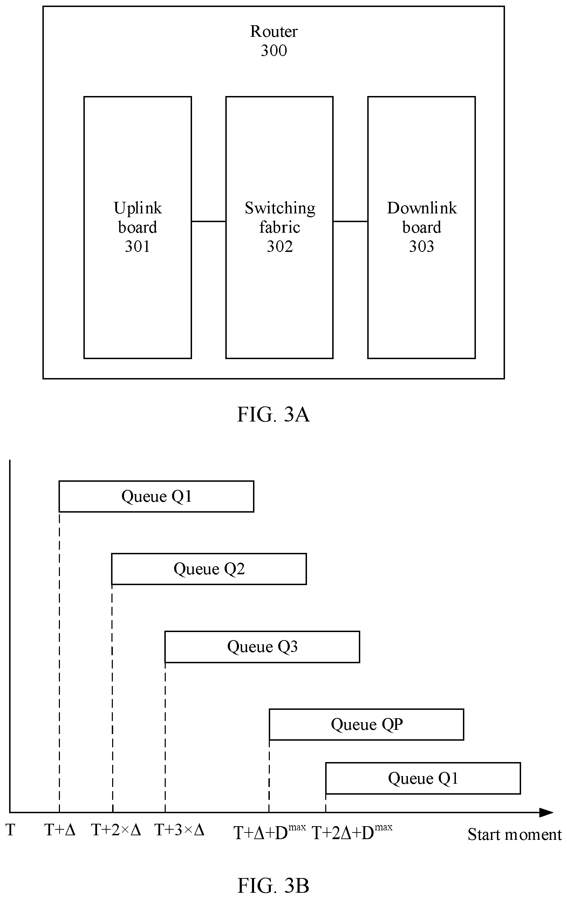

FIG. 3A is a schematic block diagram of a structure of a router 300 that can implement embodiments of this application. As shown in FIG. 3A, the router 300 includes an uplink board 301, a switching fabric 302, and a downlink board 303.

The uplink board may also be referred to as an uplink interface board. The uplink board 301 may include a plurality of input ports. The uplink board can perform processing on, such as decapsulation, on a packet received by the input port, and search for an output port by using a forwarding table. Once the output port is found (for ease of description, the found output port is referred to as a target output port below), the packet is sent to the switching fabric 302.

The switching fabric 302 forwards the received packet to one target output port. Specifically, the switching fabric 302 forwards the received packet to the downlink board 303 including the target output port. The downlink board may also be referred to as a downlink interface board. The downlink board 303 includes a plurality of output ports. The downlink board 303 receives the packet from the switching fabric 302. The downlink board may perform processing such as buffer management and encapsulation on the received packet, and then send the packet to a next node through the target output port.

It may be understood that the router shown in FIG. 3A shows only one uplink board 301 and one downlink board 303. In some embodiments, the router may include a plurality of uplink boards and/or a plurality of downlink boards.

FIG. 4A-1 to FIG. 4A-3 are a schematic flowchart of the packet processing method provided in embodiments of this application. FIG. 4A-1 to FIG. 4A-3 describe the packet processing method provided in embodiments of this application with reference to FIG. 2. It is assumed that the packet processing method in embodiments of this application is applied to the core network 230 shown in FIG. 2.

The ingress edge device 231 may receive a plurality of data flows. The ingress edge device 231 processes each of the plurality of data flows in a same manner. It is assumed that a path for the plurality of data flows received by the ingress edge device 231 is to sequentially pass through the network devices 231, 232, 233, 234 and 235. The ingress edge device 231 is a 1st network device that the plurality of data flows enter and that is in the core network 230. Therefore, the ingress edge device 231 may also be referred to as a first-hop network device or a start-hop network device. Correspondingly, the network device 232 is a second-hop network device, the network device 233 is a third-hop network device, the network device 234 is a fourth-hop network device, and the egress edge device 235 is an end-hop network device or a last-hop network device.

For an $i^{th}$ data flow in the plurality of data flows, an average bandwidth reserved for the $i^{th}$ data flow by an output port of each network device on the path is $r_i$. A plurality of data flows meet a traffic model, and the traffic model may be represented according to the following formula 4.1:

$G_i = r_i \times t + D_i$ (formula 4.1), where
t is time, $G_i$ is total traffic of data of the $i^{th}$ data flow within the time t, and $D_i$ is a maximum size of bursts of the $i^{th}$ data flow.

For better understanding of the technical solutions in this application, the following describes some concepts in this application. Each concept is described by using a first packet as an example, and this is also applied to another packet.

1. Reference moment

The ingress edge device 231 has a queuing system, and the queuing system includes a plurality of queues. For the first-hop network device (namely, the ingress edge device 231), a moment at which the network device receives a packet may be referred to as a reference moment at which the packet is in the network device. Alternatively, the network device adds the received packet to a queue in the queuing system of the network device based on a moment. This moment may be referred to as a reference moment at which the packet is in the first-hop network device.

The network device 232, the network device 233, the network device 234, and the egress edge device 235 each have a queuing system, and the queuing system includes a plurality of queues. For a non-first-hop network device (namely, the network device 232, the network device 233, the network device 234, and the egress edge device 235), the network device determines, based on a moment, to add a received packet to a queue in the queuing system. This moment may be referred to as a reference moment at which the packet is in the non-first-hop network device.

2. Theoretical upper limit of duration

The theoretical upper limit of duration is calculated based on a network calculus (network calculus) theory to obtain maximum duration required by two adjacent network devices to process a packet. In other words, duration for processing the packet by the two adjacent network devices is not greater than the theoretical upper limit of duration. The theoretical upper limit of duration does not include a transmission latency of transmitting the packet between the two adjacent network devices.

For example, a theoretical upper limit of duration for a packet from a $1^{st}$ network device in network devices to a $2^{nd}$ network device in the network devices is a theoretical upper limit of duration between a reference moment at which the packet is in the $1^{st}$ network device and a reference moment at which the packet is in the $2^{nd}$ network device. A theoretical upper limit of duration for the packet from the $2^{nd}$ network device in the network devices to a $3^{rd}$ network device in the network devices is a theoretical upper limit of duration between the reference moment at which the packet is in the $2^{nd}$ network device and a reference moment at which the packet is in the $3^{rd}$ network device in the network devices.

In this application, the theoretical upper limit of duration for the packet from the $1^{st}$ network device in the network devices to the $2^{nd}$ network device in the network devices is referred to as a theoretical upper limit of duration for the $1^{st}$ network device. The theoretical upper limit of duration for the packet from the $2^{nd}$ network device in the network devices to the $3^{rd}$ network device in the network devices is referred to as a theoretical upper limit of duration for the $2^{nd}$ network device. A theoretical upper limit of duration for another network device is similar.

3. Actual duration

The actual duration is actual duration when a packet passes through a network device from a reference moment at which the packet is in the network device to a moment at which the packet is output from the network device.

For example, first actual duration for a first packet is actual duration when the first packet passes through the ingress edge device 231 from a reference moment at which the first packet is in the ingress edge device 231 to a moment at which the first packet is output from the ingress edge device 231. Second actual duration for the first packet is actual duration when the first packet passes through the network device 232 from a reference moment at which the first packet is in the network device 232 to a moment at which the first packet is output from the network device 232.

The following describes the queuing systems of the network devices in the core network 230.

The ingress edge device 231, the network device 232, the network device 233, the network device 234, and the egress edge device 235 each have a queuing system.

Queue starting and packet sending in the queuing system meet the following rules: A queue is started at a specified moment, and a packet can be sent only after the queue is started. A plurality of queues may simultaneously keep in a started state. However, a packet added to a queue that is started first is first sent, and a packet added to a next started queue is allowed to be sent only after the packet added to the queue that is started first is sent totally.

The following describes start moments of a plurality of queues in a queuing system with reference to FIG. 3B.

As shown in FIG. 3B, the queuing system includes M queues: a queue Q1 to a queue QM. $\Delta$ is a time interval between start moments of two adjacent queues in the M queues. It is assumed that a begin moment is T, a start moment of the queue Q1 is $T+\Delta$, a start moment of the queue Q2 is $T+2\Delta$, a start moment of the queue Q3 is $T+3\Delta$, and the rest can be deduced by analogy. A start moment of the queue QM is $T+\Delta+D^{max}$. M is equal to $(\Delta+D^{max})/\Delta$. When a queue meets conditions, the queue is ended and a priority of the queue is set to a lowest priority in the queuing system. For example, as shown in FIG. 3B, after the queue Q1 is ended, a start moment of the queue Q1 is set to $T+2\Delta+D^{max}$. This is similar to another queue.

$D^{max}$ needs to be set with reference to a theoretical upper limit of duration for the network device. For example, for the ingress edge device 231, if a theoretical upper limit of duration for the ingress edge device 231 is $D^1_{max}$, $D^{max}$ of the queuing system of the ingress edge device 231 needs to be not less than $D^1_{max}$. For the network device 232, if a theoretical upper limit of duration for the network device 232 is $D^2_{max}$, $D^{max}$ of the queuing system of the network device 232 needs to be not less than $D^2_{max}$.

The following shows two possible adjustment manners for dynamically adjusting a queue in a queuing system.

    1. The queue is ended after both a first condition and a second condition are met. The first condition is that the queue is at least started at a time interval of $\Delta$, and the second condition is that the queue is empty, that is, a packet in the queue is emptied. After the queue is ended, a next start moment of the queue is reset to Tlast+Δ, where Tlast is a start moment of a queue with a lowest priority currently; or the queue is set as a queue with a lowest priority in the queuing system, and a priority of another queue in the queuing system is correspondingly upgraded.

2. A queue with a highest priority currently is determined. After the queue with the highest priority is started for duration Δ, a start moment at which the queue with the highest priority is started is Tnow. If a packet in the queue with the highest priority is emptied, the start moment of the queue with the highest priority is reset to Tnow+Δ+D$^{max}$; and then the priority of the queue with the highest priority is set to a lowest-priority queue.

The queuing systems respectively corresponding to the ingress edge device 231, the network device 232, the network device 233, the network device 234, and the egress edge device 235 may be implemented on an uplink board, or may be implemented on a downlink board. This is not specifically limited in this application.

In this embodiment of this application, a unit that is in the network device and that is configured to implement a queuing system may be referred to as a queuing system unit, and the queuing system unit is configured to add a packet to a corresponding target queue. A unit that is in the network device and that is configured to actively delay a packet or stay a packet for a period of time may be referred to as an active delay unit.

With reference to FIG. 4A-1 to FIG. 4A-3, how the network devices in the network process a received first data flow is described below by using a first data flow as an example. The first data flow is any one of a plurality of data flows received by the ingress edge device 231. Steps 401 to 410 in FIG. 4A-1 and FIG. 4A-2 are described by using a process of processing a first burst of the first data flow as an example, and a process of processing another burst of the first data flow is similar.

FIG. 4A-1 to FIG. 4A-3 are a schematic diagram of an embodiment of the packet processing method in embodiments of this application. In FIG. 4A-1 to FIG. 4A-3, the packet processing method includes the following steps.

401: The ingress edge device 231 receives a first packet at a first moment.

The first packet is a 1$^{st}$ packet in the first burst of the first data flow, the first burst is one of a plurality of bursts included in the first data flow received by the ingress edge device 231, and the first burst includes one or more packets. The ingress edge device 231 is a first-hop network device that processes one or more packets included in the first data flow.

For example, as shown in FIG. 5A, the ingress edge device 231 receives a plurality of bursts included in the first data flow: a burst B 1, a burst B2, a burst B3, and a burst B4. The first burst is the burst B1, and the burst B1 includes one or more packets. For example, the burst B1 includes three packets, and packet sizes of the three packets are the same or different. It can be learned that the first moment is a moment at which a 1$^{st}$ packet in the burst B1 arrives at the ingress edge device 231.

Sizes of packets included in each burst in the first data flow are the same or different. When the sizes of the packets included in each burst are the same, end-to-end jitter of a packet in a network caused by a size of the packet of a data flow can be avoided.

The ingress edge device 231 determines, in a plurality of manners, that the first packet is the 1$^{st}$ packet in the first burst. The following shows two possible implementations.

1. The ingress edge device 231 negotiates with a sender (sender) in advance to determine an arrival moment of a packet.

2. The ingress edge device 231 monitors the first data flow in real time. When finding that packets of the first data flow arrive discontinuously, the ingress edge device 231 may determine different bursts of the first data flow, and determine a 1$^{st}$ packet in each burst.

3. A 1$^{st}$ packet in each burst carries a special identifier, and the special identifier identifies that the packet is the 1$^{st}$ packet in the burst. The ingress edge device 231 determines the 1$^{st}$ packet in each burst based on the special identifier.

Manners in which the ingress edge device 231 determines the 1$^{st}$ packet in each burst of the first data flow are similar. Manners in which the network device 232, the network device 233, the network device 234, and the egress edge device 235 determine the 1$^{st}$ packet in each burst are also similar in the following, and details are not described one by one subsequently.

402: The ingress edge device 231 determines, based on the first moment, a first target queue from a plurality of queues included in a queuing system unit of the ingress edge device 231.

First time intervals between start moments of two adjacent queues of the plurality of queues included in the queuing system unit of the ingress edge device 231 are equal.

For example, as shown in FIG. 5A, in the queuing system unit of the ingress edge device 231, a queue x and a queue x+1 are two adjacent queues, a queue x+1 and a queue x+2 are two adjacent queues, and a queue x+2 and a queue x+3 are two adjacent queues. A time interval between a start moment of the queue x and a start moment of the queue x+1 is equal to a time interval between a start moment of the queue x+1 and a start moment of the queue x+2. A time interval between a start moment of the queue x+1 and a start moment of the queue x+2 is equal to a time interval between a start moment of the queue x+2 and a start moment of the queue x+3.

Specifically, the ingress edge device 231 selects, as the first target queue, a $k^{th}$ queue that is started after the first moment in the queuing system unit of the ingress edge device 231, where k is an integer greater than or equal to 1.

For example, as shown in FIG. 5A, the ingress edge device 231 selects the queue x that is first enabled after the first moment in the queuing system unit of the ingress edge device 231.

For example, as shown in FIG. 5B, the ingress edge device 231 selects a queue x+1 that is second enabled after the first moment in the queuing system unit of the ingress edge device 231.

403: The ingress edge device 231 adds the one or more packets included in the first burst to the first target queue in a sequence of the one or more packets included in the first burst.

The sequence of the one or more packets included in the first burst may be understood as a sequence in which the one or more packets arrive at the ingress edge device 231.

For example, the first burst includes a packet 1, a packet 2, and a packet 3. The packet 1 arrives at the ingress edge device 231 before the packet 2, and the packet 3 arrives at the ingress edge device 231 before the packet 2. In this case, the ingress edge device 231 sequentially adds the packet 1, the packet 2, and the packet 3 to the first target queue. After the first target queue is started, the ingress edge device 231 first sends the packet 1, then sends the packet 2, and finally sends the packet 3.

The ingress edge device 231 sequentially adds the one or more packets included in the first burst to the first target queue in an enqueuing manner in which a burst serves as an enqueuing granularity. For example, as shown in FIG. 5A, the first burst is the burst B1, and the ingress edge device 231 sequentially adds the one or more packets included in the burst B1 to the queue x in the queuing system unit of the ingress edge device 231.

Optionally, each of the one or more packets included in the first burst includes queue information of the first target queue; or the first packet (the $1^{st}$ packet in the first burst) includes queue information of the first target queue.

The queue information of the first target queue includes a queue number of the first target queue. For example, as shown in FIG. 5A, the first burst is B1, and the queue information of the first target queue includes a queue number x.

If the network device 232 uses an enqueuing manner in which a packet serves as an enqueuing granularity, optionally, each of the one or more packets included in the first burst includes first time information corresponding to each packet.

The first time information of each packet indicates first remaining processing duration for each packet.

The first remaining processing duration for each packet is a difference between a first theoretical upper limit of duration for each packet and first actual duration for each packet.

The first theoretical upper limit of duration for each packet is a theoretical upper limit when each packet passes through the network devices from a reference moment at which each packet is in the ingress edge device 231 to a reference moment at which each packet is in the network device 232.

The first actual duration is actual duration when each packet passes through the ingress edge device 231 from the reference moment at which each packet is in the ingress edge device 231 to a moment at which each packet is output from the ingress edge device 231. For a related description of the reference moment, refer to the foregoing descriptions of the terms.

For example, as shown in FIG. 6, a reference moment at which the first packet is in the ingress edge device 231 is $E^1$, and a moment at which the first packet is output from the ingress edge device 231 is $t^1_{out}$. In other words, first actual duration is a time interval between the reference moment $E^1$ and the moment $t^1_{out}$, and first theoretical upper limit of duration is $D^1_{max}$. In this case, first remaining processing duration for the first packet is equal to a difference obtained by subtracting the time interval between the reference moment $E^1$ and the moment $t^1_{out}$ from D max.

Specifically, the first time information of each packet includes the reference moment at which each packet is in the ingress edge device 231, the moment at which each packet is output from the ingress edge device 231, and the first theoretical upper limit of duration for each packet.

For example, first time information of the first packet is used as an example for description. The first time information of the first packet includes a reference moment at which the first packet is in the ingress edge device 231, a moment at which the first packet is output from the ingress edge device 231, and a first theoretical upper limit of duration, namely, $D^1_{max}$. Another packet in the first burst is similar.

If the network device 232 uses an enqueuing manner in which a burst serves as an enqueuing granularity, optionally, the first packet includes the first time information of the first packet. The first time information of the first packet indicates first remaining processing duration for the first packet.

Because the network device 232 uses the enqueuing manner in which the burst serves as the enqueuing granularity, the network device 232 only needs to determine first time information of the $1^{st}$ packet in the first burst. For a specific related process in which the network device 232 uses the first time information of the first packet and determines a target queue, refer to the following description. For content included in the first time information of the first packet, refer to the foregoing description. Details are not described herein again.

It should be noted that $D^1_{max}$ may be preconfigured in the network device 232 or a preset default value. In this case, the first time information of each packet or the first time information of the first packet may not include D1max.

404: The ingress edge device 231 sends the one or more packets included in the first burst to the network device 232 according to a scheduling rule of the first target queue.

Specifically, the ingress edge device 231 sends the one or more packets included in the first burst to the network device 232 according to the scheduling rule of the first target queue in the queuing system unit of the ingress edge device 231. For the scheduling rule of the first target queue, the scheduling rule of the queue may be understood with reference to the related descriptions of the M queues in the queuing system in FIG. 3B.

FIG. 6 is a timing diagram of processing the first packet by the ingress edge device 231 and the network device 232.

As shown in FIG. 6, the first packet arrives at the ingress edge device 231 at a moment $t^1_{in}$, and the first packet enters the queuing system unit of the ingress edge device 231. The first packet is output from the ingress edge device 231 at the moment $t^1_{out}$. In FIG. 6, the first packet is input into the network device 232 at a moment $t^2_{in}$. The first packet leaves a switching fabric of the network device 232 at a moment $t'^2_{in}$, and enters an active delay unit of the network device 232. The network device 232 determines a reference moment $E^2$ at which the first packet is in the network device 232 based on the first time information of the first packet, and selects the target queue from a queuing system unit of the network device 232 based on the reference moment $E^2$ at which the first packet is in the network device 232. The first packet is output from the network device 232 at a moment $t^2_{out}$.

It may be understood that a queuing system unit Q and an active delay unit D shown in FIG. 6 and subsequent accompanying drawings are merely different units logically divided. In a specific device form, the queuing system unit Q and the active delay unit D may be a same physical unit.

It should be noted that, in FIG. 6, the reference moment $E^1$ at which the first packet is in the ingress edge device 231 is set to the first moment $t^1_{in}$ at which the ingress edge device 231 receives the first packet.

The first theoretical upper limit of duration for the first packet is a theoretical upper limit of duration when the first packet passes through the ingress edge device 231 and the network device 232 from the reference moment $E^1$ at which the first packet is in the ingress edge device 231 to the reference moment $E^2$ at which the first packet is in the network device 232. The first theoretical upper limit of duration for the first packet does not include a transmission latency of the first packet from the ingress edge device 231 to the network device 232.

First actual duration for the first packet is duration when the first packet passes through the ingress edge device 231 from the reference moment $E^1$ at which the first packet is in the ingress edge device 231 to the moment $t^1_{out}$.

405: The network device 232 sends the one or more packets included in the first burst to the network device 233.

The network device 232 may add the one or more packets included in the first burst to the target queue in an enqueuing manner in which a burst serves as an enqueuing granularity, or may add the one or more packets included in the first burst to the target queue in an enqueuing manner in which a packet serves as an enqueuing granularity. The following separately describes 405 with reference to the two different enqueuing manners.

2. With reference to FIG. 4B, the following describes 405 based on that the network device 232 uses the enqueuing manner in which the burst serves as the enqueuing granularity.

As shown in FIG. 4B, before 405, this embodiment further includes steps 405a and 405b.

405a: The network device 232 determines a sixth target queue from the queuing system unit of the network device 232 based on the first time information of the first packet included in the first packet.

The first time information of the first packet indicates the first remaining processing duration for the first packet. The network device 232 may determine the reference moment at which the first packet is in the ingress edge device 231 by using the first remaining processing duration for the first packet. In this case, the network device 232 selects the sixth target queue based on the reference moment at which the first packet is in the ingress edge device 231, where a start moment of the sixth target queue is later than the reference moment $E^2$.

Specifically, the first time information corresponding to the first packet includes the reference moment at which the first packet is in the ingress edge device 231 and the first theoretical upper limit of duration for the first packet. For example, as shown in FIG. 6, the reference moment at which the first packet is in the ingress edge device 231 is $E^1$, and the first theoretical upper limit of duration is $D^1_{max}$. In this case, it can be learned that the network device 232 may determine the reference moment $E^2$ at which the first packet is in the network device 232 by using $D^1_{max}$ and $E^1$. It can be learned from FIG. 6 that the first packet enters the active delay unit of the network device 232 at the moment $t'^2_{in}$, and the network device 232 may determine, based on the moment $t'^2_{in}$ and the reference moment $E^2$, duration for which the first packet stays in the active delay unit of the network device 232. In this case, the network device 232 may select the sixth target queue based on the reference moment $E^2$ at which the first packet is in the network device 232, and the sixth target queue is started after the reference moment $E^2$.

405b: The network device 232 adds the one or more packets included in the first burst to the sixth target queue in the sequence of the one or more packets included in the first burst.

The first packet added to the sixth target queue includes second time information of the first packet, and the second time information of the first packet indicates second remaining processing duration for the first packet.

The second remaining processing duration for the first packet is a difference between a second theoretical upper limit of duration for the first packet and second actual duration for the first packet. The second theoretical upper limit of duration for the first packet is a theoretical upper limit of duration when the first packet passes through the network devices from a reference moment at which the first packet is in the network device 232 to a reference moment at which the first packet is in the network device 233. The second actual duration is actual duration when the first packet passes through the network device 232 from the reference moment at which the first packet is in the network device 232 to a moment at which the first packet is output from the network device 232.

Specifically, the network device 232 sequentially adds the one or more packets included in the first burst to the sixth target queue in the enqueuing manner in which the burst serves as the enqueuing granularity.

Optionally, the second time information of the first packet includes the reference moment at which the first packet is in the network device 232, the moment at which the first packet is output from the network device 232, and the second theoretical upper limit of duration for the first packet.

For example, as shown in FIG. 6 and FIG. 7, the reference moment at which the first packet is in the network device 232 is the reference moment $E^2$, and the second theoretical upper limit of duration for the first packet is $D^2_{max}$. For the first packet, $D^2_{max}$ is a maximum latency from a moment at which the first packet is enqueued by the network device 232 to the queuing system unit of the network device 232 to a moment at which the first packet is enqueued to a queuing system unit of the network device 233.

It should be noted that $D^2_{max}$ may be preconfigured in the network device 233 or a preset default value. In this case, the second time information of the first packet may not include $D^2_{max}$.

If the one or more packets included in the first burst each include the queue information of the first target queue in 404, the one or more packets in the first burst added to the sixth target queue also each include the queue information of the first target queue. If the first packet includes the queue information of the first target queue in 404, the first packet in the first burst added to the sixth target queue includes the queue information of the first target queue.

In this case, 405 specifically includes 405c.

405c: The network device 232 sends the one or more packets included in the first burst to the network device 233 according to a scheduling rule of the sixth target queue.

Specifically, the network device 232 sends the one or more packets included in the first burst to the network device 233 according to the scheduling rule of the sixth target queue in the queuing system unit of the network device 232. For the scheduling rule of the sixth target queue, the scheduling rule of the queue may be understood with reference to the foregoing related descriptions of the M queues in the queuing system in FIG. 3B.

FIG. 7 is a timing diagram of processing the first packet by the network device 232 and the network device 233. The first packet arrives at the network device 232 at the moment $t^2_{in}$, and the first packet leaves the switching fabric of the network device 232 at the moment $t'^2_{in}$, and enters the active delay unit of the network device 232. The network device 232 determines the reference moment $E^2$ at which the first packet is in the network device 232 based on the first time information of the first packet, and selects the sixth target queue from the queuing system unit of the network device 232 based on the reference moment $E^2$ at which the first packet is in the network device 232. The first packet is output from the network device 232 at the moment $t^2_{out}$.

1. With reference to FIG. 4B, the following describes 405 based on that the network device 232 uses the enqueuing manner in which the packet serves as the enqueuing granularity. The following describes packet enqueuing and sending by using FIG. 4C by using the first packet in the first burst as an example.

As shown in FIG. 4C, before 405, this embodiment further includes 405d and 405e.

405d: The network device 232 determines a sixth target queue from the queuing system unit of the network device 232 based on the first time information included in the first packet.

405d is similar to 405a. For details, refer to the related description in 405a.

405e: The network device 232 adds the first packet to the sixth target queue.

The first packet added to the sixth target queue includes second time information of the first packet. For a related description of the second time information, refer to 405b.

If the first packet includes the queue information of the first target queue in 404, the first packet added to the sixth target queue also includes the queue information of the first target queue.

In this case, 405 specifically includes 405f.

Step 405f: The network device 232 sends the first packet to the network device 233 according to a scheduling rule of the sixth target queue.

A procedure for processing other packets in the first burst is similar. The network device 232 determines, based on first time information corresponding to each packet included in each of the other packets in the first burst, a target queue corresponding to each packet, adds each packet to the target queue corresponding to each packet, and then sends each packet to the network device 233 by using a scheduling rule of the target queue corresponding to each packet.

406: The network device 233 sends the one or more packets included in the first burst to the network device 234.

406 is similar to 405. For details, refer to the related description in 405.

FIG. 7 is the timing diagram of processing the first packet by the network device 232 and the network device 233. The first packet arrives at the network device 233 at a moment $t^3_{in}$, and the first packet leaves a switching fabric of the network device 233 at a moment $t'^3_{in}$, and enters an active delay unit of the network device 233. The network device 233 determines a reference moment $E^3$ at which the first packet is in the network device 232 based on the second time information of the first packet, and selects the target queue from the queuing system unit of the network device 233 based on the reference moment $E^3$ at which the first packet is in the network device 233. The first packet is output from the network device 233 at a moment $t^3_{out}$.

407: The network device 234 sends the one or more packets included in the first burst to the egress edge device 235.

A processing process of 407 is similar to that of 405. For details, refer to the related description in 405.

A difference lies in that, in this embodiment, enqueuing and scheduling are performed between the ingress first-hop network device and a last-hop network device by using queue mapping, to ensure a deterministic latency upper bound and zero end-to-end jitter of a packet. Therefore, the one or more packets included in the first burst sent by the network device 234 to the egress edge device 235 in 407 may not carry time information of the packet.

If the one or more packets included in the first burst sent by the network device 233 and received by the network device 234 each include the queue information of the first target queue, the one or more packets included in the first burst sent by the network device 234 to the egress edge device 235 each include the queue information of the first target queue.

If the first packet in the first burst sent by the network device 233 and received by the network device 234 includes the queue information of the first target queue, the first packet in the first burst sent by the network device 234 to the egress edge device 235 includes the queue information of the first target queue.

408: The egress edge device 235 determines a third target queue from a queuing system unit of the egress edge device 235.

Specifically, the egress edge device 235 determines the first target queue to which the one or more packets included in the first burst in the ingress edge device 231 are added, and then the egress edge device 235 determines, based on a first mapping relationship, the third target queue corresponding to the first target queue. The first mapping relationship includes a mapping relationship between the queue in the queuing system unit of the ingress edge device 231 and a queue of a queuing system unit of the egress edge device 235.

Optionally, the first mapping relationship may be preconfigured in the egress edge device 235, or may be obtained by the egress edge device 235 in a data plane learning manner or a control plane configuration manner. This is not specifically limited in this application. In addition, the mapping relationship between the queue in the queuing system unit of the ingress edge device 231 and the queue in the queuing system unit of the egress edge device 235 may be determined by using experimental data.

In a possible implementation, the egress edge device 235 may determine the first target queue based on the queue information of the first target queue included in the first packet sent by the network device 234. Then, the egress edge device 235 determines, based on the first mapping relationship, the third target queue corresponding to the first target queue.

For example, as shown in FIG. 5A, the queue information of the first target queue includes the queue number x. The egress edge device 235 determines, based on the first mapping relationship, a queue number y corresponding to the queue number x, that is, the third target queue is a queue whose queue number is y in the queuing system unit of the egress edge device 235. It can be learned that the first mapping relationship may include a mapping relationship between a queue number of the queue in the queuing system unit of the ingress edge device 231 and a queue number of the queue in the queuing system unit of the egress edge device 235. For example, with reference to the example shown in FIG. 5A, the first mapping relationship may be expressed as follows.

Table 1

| Queue number of a queue in the queuing system unit of the ingress edge device 231 | Queue number of a queue in the queuing system unit of the egress edge device 235 |
|---|---|
| Queue number x | Queue number y |
| Queue number x+1 | Queue number y+1 |
| Queue number x+2 | Queue number y+2 |
| Queue number x+3 | Queue number y+3 |

It can be learned from Table 1 that the queue with the queue number x in the queuing system unit of the ingress edge device 231 corresponds to the queue with the queue number y in the queuing system unit of the egress edge device 235. The queue with the queue number x+1 in the queuing system unit of the ingress edge device 231 corresponds to the queue with the queue number y+1 in the queuing system unit of the egress edge device 235. The queue with the queue number x+2 in the queuing system unit of the ingress edge device 231 corresponds to the queue with the queue number y+2 in the queuing system unit of the egress edge device 235. The queue with the queue number x+3 in the queuing system unit of the ingress edge device 231 corresponds to the queue with the queue number y+3 in the queuing system unit of the egress edge device 235.

409: The egress edge device 235 adds the one or more packets included in the first burst to the third target queue in the sequence of the one or more packets included in the first burst.

Specifically, the egress edge device 235 adds the one or more packets included in the first burst to the third target queue in an enqueuing manner in which a burst serves as an enqueuing granularity. For a related description of the sequence of the one or more packets included in the first burst, refer to the related description in 403.

For example, as shown in FIG. 5A, the first burst is the burst B1, and the first target queue is the queue x. The egress edge device 235 determines, based on the first mapping relationship, that the queue x corresponds to the queue y. The egress edge device 235 adds the one or more packets included in the first burst to the queue y in the sequence of the one or more packets included in the first burst.

For example, as shown in FIG. 5B, the first burst is a burst B1, and the first target queue is the queue x+1. The egress edge device 235 determines that the queue x+1 corresponds to a queue y+1. The egress edge device 235 adds the one or more packets included in the first burst to the queue y+1 in the sequence of the one or more packets included in the first burst.

410: The egress edge device 235 sends the one or more packets included in the first burst according to a scheduling rule of the third target queue.

Specifically, the egress edge device 235 sends the one or more packets included in the first burst according to the scheduling rule of the third target queue in the queuing system unit of the egress edge device 235. For the scheduling rule of the third target queue, the scheduling rule of the queue may be understood with reference to the foregoing related descriptions of the M queues in the queuing system in FIG. 3B.

In this embodiment of this application, the ingress edge device 231 receives the first packet from the network at the first moment, where the first packet is the 1st packet in the first burst of the first data flow, the first burst is one of the plurality of bursts included in the first data flow received by the ingress edge device 231, the first burst includes the one or more packets, and the ingress edge device 231 is the first-hop network device that processes the one or more packets included in the first data flow. Then, the ingress edge device 231 determines, based on the first moment, the first target queue from the plurality of queues included in the queuing system unit of the ingress edge device 231, and adds the one or more packets included in the first burst to the first target queue in the sequence of the one or more packets included in the first burst. The ingress edge device 231 processes the first target queue according to the scheduling rules of the plurality of queues in the queuing system unit of the ingress edge device 231. It can be learned that, in the technical solution in this embodiment of this application, the ingress edge device 231 determines the first target queue based on the first moment at which the 1st packet in the first burst is received, and the ingress edge device 231 sequentially adds the one or more packets included in the first burst to the first target queue in an enqueuing manner in which a burst serves as a granularity. The last-hop network device that processes the one or more packets included in the first burst can determine the corresponding third target queue, and then sequentially add the one or more packets included in the first burst to the third target queue. To be specific, enqueuing and scheduling are performed by using mapping between the first target queue and the third target queue between the first-hop network device and the last-hop network device. This ensures that a shape of a data flow entering the network device is the same as a shape of the data flow leaving the network device, thereby ensuring a deterministic latency upper bound and zero end-to-end jitter of a packet.

Optionally, the first data flow includes a plurality of bursts, second time intervals at which two adjacent bursts in the first data flow arrive at the ingress edge device 231 are equal, and the second time interval is equal to an integral multiple of the first time interval. A fifth time interval between start moments of target queues to which the two adjacent bursts are respectively mapped in the ingress edge device 231 is equal to the second time interval.

With reference to steps 401 to 420, the following shows a process of processing two adjacent bursts (the first burst and a third burst) of the first data flow by the network devices in the network. A process of processing two other adjacent bursts of the first data flow is also similar.

411: The ingress edge device 231 receives a third packet at a third moment.

The third packet is a 1st packet in the third burst, the third burst is a burst of the first data flow, and the first burst and the third burst are two adjacent bursts in the first data flow.

For example, as shown in FIG. 5A, the first burst is the burst B1 of the first data flow, a second burst is the burst B2 of the first data flow, and the burst B1 and the burst B2 are two adjacent bursts in the first data flow. Alternatively, the first burst is the burst B2 of the first data flow, a second burst is the burst B3 of the first data flow, and the burst B2 and the burst B3 are two adjacent bursts in the first data flow.

The second time intervals at which two adjacent bursts in the first data flow arrive at the ingress edge device 231 are equal, and the second time interval is the integral multiple of the first time interval.

For example, as shown in FIG. 5A, the first burst is the burst B1, and the third burst is the burst B2. The burst B1 arrives at the ingress edge device 231 at the first moment, and the burst B2 arrives at the ingress edge device 231 at the third moment. A second time interval between the first moment and the third moment is equal to a first time interval, that is, is equal to a gating control granularity of the queue in the queuing system unit of the ingress edge device 231 (that is, the gating control granularity is equal to duration for one queue in the queuing system unit of the ingress edge device 231).

For example, as shown in FIG. 5C, the first burst is B1, and the third burst is B2. The burst B1 arrives at the ingress edge device 231 at a first moment, and the burst B2 arrives at the ingress edge device 231 at a third moment. A second time interval between the first moment and the third moment is equal to twice a first time interval, that is, is equal to twice a gating control granularity of the queue in the queuing system unit of the ingress edge device 231.

Quantities of bits of the plurality of bursts included in the first data flow are the same or different.

For example, as shown in FIG. 5A, the burst B1, the burst B2, the burst B3, and the burst B4 included in the first data flow all include a same quantity of bits. In other words, it may be understood that the burst B1, the burst B2, the burst B3, and the burst B4 each include a same amount of data.

Quantities of packets included in the plurality of bursts are the same or different. For example, the burst B1 includes three packets, the burst B2 includes four packets, and the burst B3 includes three packets. In other words, a quantity of packets included in the burst B1 is the same as a quantity of packets included in the burst B3, but the quantity of packets included in the burst B1 is different from a quantity of packets included in the burst B2.

Optionally, sizes of packets included in each burst are the same. If the sizes of the packets included in each burst are the same, end-to-end jitter of the packets caused by different sizes of the packets can be avoided. For example, as shown in FIG. 5A, the burst B1 includes the three packets, and quantities of bits included in each of the three packets are the same. In this way, during transmission of the three packets in the network devices in the network, end-to-end jitter of the packets caused by different duration when the three packets pass through the network devices in the network due to sizes of the three packets can be avoided.

412: The ingress edge device 231 determines, based on the third moment, a fifth target queue from the plurality of queues included in the queuing system unit of the ingress edge device 231.

Specifically, the ingress edge device 231 selects, as the fifth target queue, a $k^{th}$ queue that is started after the third moment in the queuing system unit of the ingress edge device 231.

For example, as shown in FIG. 5A, the first burst is the burst B1, and the third burst is the burst B2. The ingress edge device 231 determines that the burst B1 is mapped to the queue x, and determines that the burst B2 is mapped to the queue x+1.

For example, as shown in FIG. 5B, the first burst is the burst B1, and the third burst is a burst B2. The ingress edge device 231 determines that the burst B1 is mapped to the queue x+1 and the burst B2 is mapped to a queue x+2.

413: The ingress edge device 231 adds one or more packets included in the third burst to the fifth target queue in a sequence of the one or more packets included in the third burst.

414: The ingress edge device 231 sends the one or more packets included in the third burst to the network device 232 according to a scheduling rule of the fifth target queue.

413 and 414 are similar to 403 and 404. For details, refer to the related descriptions in 403 and 404.

415: The network device 232 sends the one or more packets included in the third burst to the network device 233.

416: The network device 233 sends the one or more packets included in the third burst to the network device 234.

417: The network device 234 sends the one or more packets included in the third burst to the egress edge device 235.

415 to 417 are similar to 405 to 407. For details, refer to the related descriptions in 405 to 407.

418: The egress edge device 235 determines a fourth target queue from the queuing system unit of the egress edge device 235.

A time interval between a moment at which the egress edge device 235 releases the one or more packets included in the first burst to the queuing system unit of the egress edge device 235 and a moment at which the egress edge device 235 releases the one or more packets included in the third burst to the queuing system unit of the egress edge device 235 is the fourth time interval.

For example, as shown in FIG. 5C, the first burst is the burst B1, and the third burst is the burst B2. A moment at which the egress edge device 235 releases the burst B1 to the queuing system unit of the egress edge device 235 is T13, a moment at which the egress edge device 235 releases the burst B2 to the queuing system unit of the egress edge device 235 is T31, and a time interval between the moment T13 and the moment T31 is the fourth time interval.

A time interval between a start moment of the third target queue and a start moment of the fourth target queue is the fifth time interval. The fourth time interval is equal to the fifth time interval.

For example, as shown in FIG. 5C, the burst B1 is mapped to a queue y, and the burst B2 is mapped to a queue y+2. A start moment of the queue y is T12, and a start moment of the queue y+2 is T22. A time interval between the start moment T12 and the start moment T22 is the fifth time interval. The time interval between the moment T13 and the moment T31 is the fourth time interval, and the fourth time interval is equal to the fifth time interval.

A time interval between start moments of two adjacent queues of a plurality of queues included in the queuing system unit of the egress edge device 235 is a sixth time interval.

For example, as shown in FIG. 5C, the queue y and a queue y+1 in the queuing system unit of the egress edge device 235 are two adjacent queues, and a time interval between the start moment of the queue y and a start moment of the queue y+1 is the sixth time interval.

The third target queue and the fourth target queue are two adjacent or non-adjacent queues. The fifth time interval between the start moment of the third target queue and the start moment of the fourth target queue is an integral multiple of the sixth time interval.

For example, as shown in FIG. 5A, the third target queue is the queue y, the fourth target queue is a queue y+1, and the queue y and the queue y+1 are two adjacent queues. The fifth time interval between a start moment of the queue y and a start moment of the queue y+1 is equal to the sixth time interval.

For example, as shown in FIG. 5C, the third target queue is the queue y, the fourth target queue is the queue y+2, and the queue y and the queue y+2 are two non-adjacent queues. The fifth time interval between the start moment of the queue y and the start moment of the queue y+2 is equal to twice the sixth time interval.

To enable end-to-end jitter of the packet in the network devices in the network to be zero, the following relationship exists between the second time interval and the fifth time interval: The second time interval is equal to the fifth time interval.

The following provides description with reference to FIG. 5C. For example, as shown in FIG. 5C, a moment at which a 1st packet in the burst B1 arrives at the ingress edge device 231 is T11, and a moment at which a 1st packet in the burst B2 arrives at the ingress edge device 231 is T21. A moment at which the 1st packet in the burst B1 leaves the egress edge device 235 is T12, and a moment at which the 1st packet in the burst B2 leaves the egress edge device 235 is T22.

It can be learned that duration when the 1st packet in the burst B1 passes through the network devices in the network is T12-T11, and duration when the 1st packet in the burst B2 passes through the network devices in the network is T22-T21. To enable the end-to-end jitter of the packet in the network devices in the network to be zero, T12-T11 needs to be equal to T22-T21. This is specifically represented by formula 4.2:

$$T12–T11=T22–T21 \text{ (formula 4.2)}.$$

The formula 4.2 is transformed to obtain T12-T22=T11-T21. T12 to T22 is the fifth time interval, and T11 to T21 is the second time interval. Therefore, it can be determined that the second time interval is equal to the fifth time interval.

The second time interval is equal to the integral multiple of the first time interval, the fifth time interval is equal to the integral multiple of the sixth time interval, and the second time interval is equal to the fifth time interval. Therefore, it can be learned that the first time interval is equal to the sixth time interval. In other words, the gating control granularity of the queue in the queuing system unit of the ingress edge device 231 is equal to a gating control granularity of a queue in the queuing system unit of the egress edge device 235.

419: The egress edge device 235 adds the one or more packets included in the third burst to the fourth target queue in the sequence of the one or more packets included in the third burst.

420: The egress edge device 235 sends the one or more packets included in the third burst according to a scheduling rule of the fourth target queue.

419 and 420 are similar to 409 and 410. For details, refer to the related descriptions in 409 and 410. Details are not described herein again.

It can be learned that, with reference to FIG. 8, $D^1_{max}$ is a maximum latency from a moment at which a packet is received by the ingress edge device 231 to a moment at which the packet is enqueued to the queuing system unit of the network device 232. $D^2_{max}$ is a maximum latency from the moment at which the packet is enqueued by the network device 232 to the queuing system unit of the network device 232 to a moment at which the packet is enqueued to the queuing system unit of the network device 233. $D^3_{max}$ is a maximum latency from the moment at which the packet is enqueued by the network device 233 to the queuing system unit of the network device 233 to a moment at which the packet is enqueued to a queuing system unit of the network device 234. $D^4_{max}$ is a maximum latency from the moment at which the packet is enqueued by the network device 234 to the queuing system unit of the network device 234 to a moment at which the packet is enqueued to the queuing system unit of the egress edge device 235. $D^h$ is a maximum latency of the packet in the queuing system unit and a scheduling unit of the egress edge device 235. It can be learned from the technical solution in this embodiment of this application that $D^h$ of different packets in the egress edge device 235 is the same. This ensures that duration when different packets pass through from the ingress edge device 231 to the egress edge device 235 is the same, and end-to-end jitter of the packets in the network devices in the network is zero, thereby resolving end-to-end jitter of the packet caused by scheduling in a damper solution.

It should be noted that the foregoing describes the technical solution in this embodiment of this application by using the damper solution for intermediate nodes (the network device 232, the network device 233, and the network device 234), to resolve the end-to-end jitter of the packet caused by scheduling in the damper solution. In an actual application, the technical solution in this embodiment of this application may also be implemented based on another solution, provided that the another solution can ensure that jitter of different packets of a same data flow from the ingress edge device 231 to the network device 234 is zero. This is not specifically limited in this application. This embodiment of this application mainly enables $D^h$ of different packets in the egress edge device 235 to be the same, so that the end-to-end jitter of the packets in the network devices in the network is zero.

In this embodiment of this application, the ingress edge device 231 may receive a plurality of data flows. The following uses an example in which the ingress edge device 231 receives the first data flow and a second data flow for description.

For a related description of the first data flow, refer to the foregoing embodiment shown in FIG. 4A-1 to FIG. 4A-3. The ingress edge device 231 receives a second packet at a second moment, and determines, based on the second moment, a second target queue from the plurality of queues included in the queuing system unit of the ingress edge device 231. Then, the ingress edge device 231 adds one or more packets included in a second burst to the second target queue in a sequence of the one or more packets included in the second burst, and then sends the one or more packets included in the second burst according to a scheduling rule of the second target queue.

The second packet is a 1st packet in the second burst of the second data flow, the second burst is one of a plurality of bursts included in the second data flow received by the ingress edge device 231, and the second burst includes one or more packets.

For example, as shown in FIG. 9A, the second data flow includes a plurality of bursts: a burst A1, a burst A2, a burst A3, and a burst A4. If the second burst is the burst A2, the second moment is a moment at which the burst A2 arrives at the ingress edge device 231.

Third time intervals at which two adjacent bursts of the plurality of bursts included in the second data flow arrive at the ingress edge device 231 are equal, and the third time interval is an integral multiple of the first time interval. The first time interval is a time interval between start moments of two adjacent queues in the queuing system unit of the ingress edge device 231.

For example, as shown in FIG. 9A, the second data flow includes the burst A1, the burst A2, the burst A3, and the burst A4. The burst A1, the burst A2, and the burst A3 are used as examples for description. The burst A1 and the burst A2 are two adjacent bursts in the second data flow, and the burst A2 and the burst A3 are two adjacent bursts in the second data flow.

A time interval between a moment at which the burst A1 arrives at the ingress edge device 231 and the moment at which the burst A2 arrives at the ingress edge device 231 is equal to a time interval between the moment at which the burst A2 arrives at the ingress edge device 231 and a moment at which the burst A3 arrives at the ingress edge device 231. In addition, the time interval between the moment at which the burst A1 arrives at the ingress edge device 231 and the moment at which the burst A2 arrives at the ingress edge device 231 is equal to the third time interval. The time interval between the moment at which the burst A2 arrives at the ingress edge device 231 and the moment at which the burst A3 arrives at the ingress edge device 231 is equal to the first time interval. In other words, the third time interval is equal to the second time interval.

A time interval between moments at which the egress edge device 235 releases two adjacent bursts of the second data flow to the queuing system unit of the egress edge device 235 is equal to a time interval between start moments of target queues to which the two adjacent bursts are respectively mapped in the egress edge device 235.

For example, as shown in FIG. 9A, the burst A1 of the second data flow is mapped to a queue y, and the burst A2 of the second data flow is mapped to a queue y+1. A moment at which the egress edge device 235 releases the burst A1 of the second data flow to the queuing system unit of the egress edge device 235 is T1, and a moment at which the egress edge device 235 releases the burst A2 of the second data flow to the queuing system unit of the egress edge device 235 is T2. A time interval between the moment T1 and the moment T2 is equal to a time interval between a start moment of the queue y and a start moment of the queue y+1.

The time interval between the start moments of the target queues to which the two adjacent bursts are respectively mapped in the egress edge device 235 is equal to a time interval between moments at which the two adjacent bursts respectively arrive at the ingress edge device 231.

For example, as shown in FIG. 9A, the time interval between the moment at which the burst A1 of the second data flow arrives at the ingress edge device 231 and the moment at which the burst A2 of the second data flow arrives at the ingress edge device 231 is the third time interval. The burst A1 of the second data flow is mapped to the queue y, and the burst A2 of the second data flow is mapped to the queue y+1. The time interval between the start moment of the queue y and the start moment of the queue y+1 is equal to the third time interval.

Relationships between some related time intervals of the second data flow are similar to those of the first data flow. For a description of specific setting reasons, refer to the related description of the first data flow in the foregoing embodiment shown in FIG. 4A-1 to FIG. 4A-3.

The first target queue is the second target queue, or the second target queue is after the first target queue. The first target queue is a last queue in the queuing system unit of the ingress edge device 231, or the first target queue is before a last queue in the queuing system unit of the ingress edge device 231.

At least one burst in the second data flow and one burst of the first data flow are simultaneously added to a same target queue in the queuing system unit of the ingress edge device 231.

For example, as shown in FIG. 9A, a 1st burst of the first data flow is the burst B1, and a 1st burst A1 of the second data flow arrives at the ingress edge device 231 after the 1st burst B1 of the first data flow arrives at the ingress edge device 231. It can be learned from FIG. 9A that both the burst A1 and the burst B1 are added to a queue x of the queuing system unit of the ingress edge device 231. The second burst A2 of the second data arrives at the ingress edge device 231 after the second burst B2 of the first data flow arrives at the ingress edge device 231. It can be learned from FIG. 9A that both the burst A2 and the burst B2 are added to a queue x+1 of the queuing system unit of the ingress edge device 231.

For example, as shown in FIG. 9B, a 1st burst of the first data flow is a burst B1, and some packets in a 1st burst A1 of the second data flow and some packets in the burst B1 simultaneously arrive at the ingress edge device 231. It can be learned from FIG. 9B that both the burst A and the burst B 1 are added to a queue x of the queuing system unit of the ingress edge device 231.

To implement that end-to-end jitter of a packet in the network devices in the network is zero, the egress edge device 235 receives a plurality of data flows, bursts of different data flows in the plurality of data flows fall into a same target queue of the queuing system unit in the egress edge device 235 (the bursts of the different data flows in the ingress edge device 231 fall into a same target queue of the queuing system unit in the ingress edge device 231), and the egress edge device 235 may select a corresponding queue group for each data flow, and processes the queue group according to a scheduling rule of the queue group.

The following describes a plurality of queue groups included in the queuing system unit of the egress edge device 235 and priorities of the queue groups.

Operating principles and setting mechanisms of a plurality of queues included in each queue group are consistent with those of the plurality of queues included in the queuing system described in FIG. 3B. Each of the plurality of queue groups corresponds to one priority, and priorities of different queue groups are different.

For example, as shown in FIG. 10, the egress edge device 235 includes a first queue group and a second queue group. That the first queue group is higher than the second queue group means that for two queues with a same queue number (namely, two queues that are simultaneously started) in the first queue group and the second queue group, a priority of the queue in the first queue group is higher than that of the queue in the second queue group. For example, a priority of a queue y in the first queue group is higher than that of a queue y in the second queue group, and both the queue y in the first queue group and the queue y in the second queue group are started. However, a packet in the queue y in the second queue group starts to be sent only after a packet in the queue y in the first queue group is emptied. Packet sending manners for queues with a same queue number in the first queue group and the second queue group are also similar, and are not described one by one herein again.

The following provides description with reference to an embodiment shown in FIG. 11A to FIG. 11C. In the embodiment shown in FIG. 11A to FIG. 11C, an example in which both a second burst of a second data flow and a first burst of a first data flow are added to a first target queue of the ingress edge device 231 is used for description, that is, a second target queue is a first target queue.

It should be noted that the embodiment shown in FIG. 11A to FIG. 11C is merely an example, and the second burst of the second data flow may be added to a same target queue as another burst of the first data flow. For example, both the second burst of the second data flow and a third burst of the first data flow are added to a fifth target queue of the ingress edge device 231, that is, the second target queue is the fifth target queue. In addition, FIG. 11A to FIG. 11C merely describe a case in which both the second burst of the second data flow and the first burst of the first data flow are added to a same target queue. In an actual application, two or more bursts of the second data flow and a burst of the first data flow may be added to a same target queue in the queuing system unit of the ingress edge device 231. This is not specifically limited in this application.

FIG. 11A to FIG. 11C are a schematic diagram of another embodiment of the packet processing method in embodiments of this application. In FIG. 11A to FIG. 11C, the packet processing method includes the following steps.

1101: The ingress edge device 231 receives a first packet at a first moment.

1102: The ingress edge device 231 determines the first target queue from the queuing system unit of the ingress edge device 231 based on the first moment.

1103: The ingress edge device 231 adds one or more packets included in the first burst to the first target queue in a sequence of the one or more packets included in the first burst.

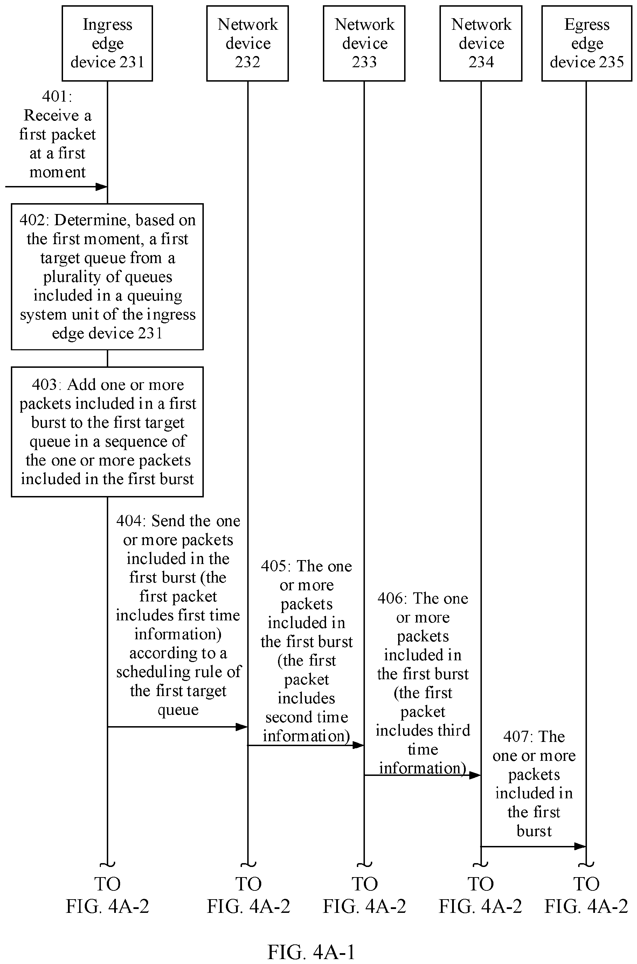

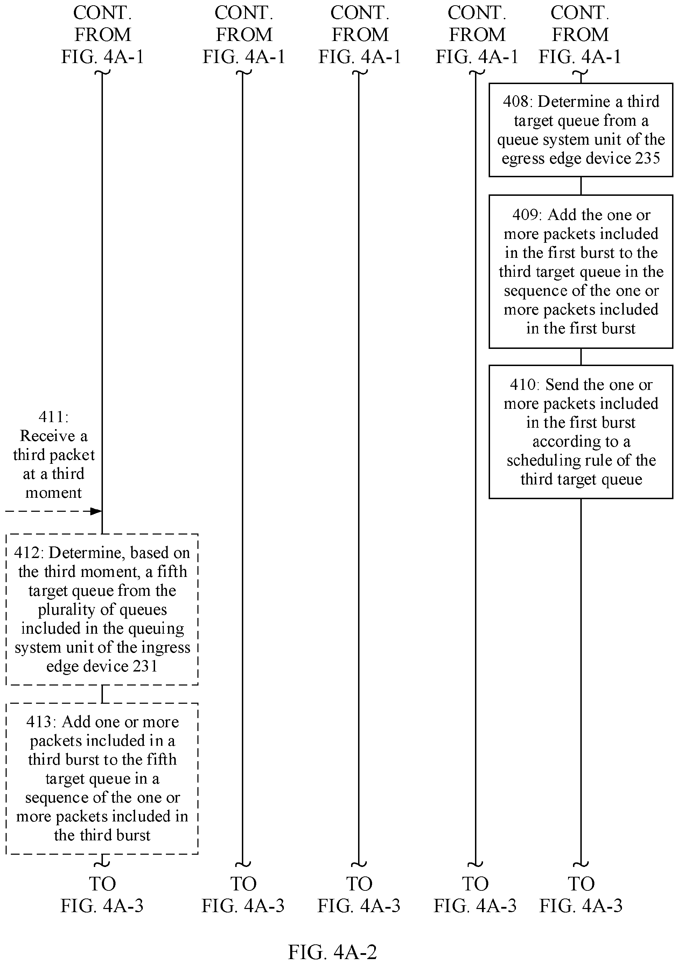

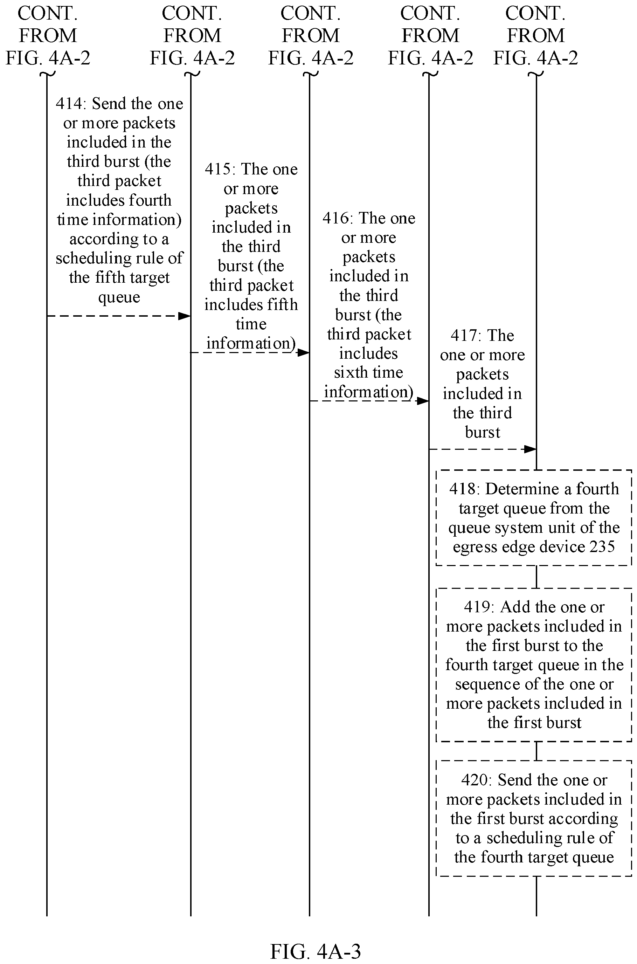

1101 to 1103 are similar to 401 to 403 in the embodiment shown in FIG. 4A-1. For details, refer to the related descriptions in 401 to 403 in the embodiment shown in FIG. 4A-1.

In this embodiment, optionally, the one or more packets included in the first burst that are added to the first target queue further each include a queue group number used to indicate a first queue group to which a queue to which the one or more packets included in the first burst that are added by the egress edge device 235 belongs; or the first packet added to the first target queue includes the queue group number of the first queue group.

Specifically, the ingress edge device 231 determines, based on a second mapping relationship, the first queue group corresponding to the first data flow, and adds the queue group number of the first queue group to each packet in the first burst or the first packet in the first burst.

The second mapping relationship includes a mapping relationship between a queue group in a queuing system unit of the egress edge device 235 and a data flow. Each data flow corresponds to one queue group, and each queue group corresponds to one priority.

Optionally, the second mapping relationship may be preconfigured in the ingress edge device 231, or may be obtained by the ingress edge device 231 through data plane learning or control plane configuration. This is not specifically limited in this application.

A priority of a data flow may be determined based on factors such as a user level or an importance degree of a service corresponding to the data flow. For example, a higher user level of a user indicates a higher priority of a data flow of the user. A higher importance degree of a service of a data flow indicates a higher priority of the data flow. A higher priority of a data flow indicates a higher priority of a queue group corresponding to the data flow.

The ingress edge device 231 may identify, by using a 5-tuple of a packet, classes of data flows to which different bursts belong.

1104: The ingress edge device 231 receives a second packet at a second moment.

1105: The ingress edge device 231 determines, based on the second moment, the first target queue from a plurality of queues included in the queuing system unit of the ingress edge device 231.

1106: The ingress edge device 231 adds one or more packets included in the second burst to the first target queue in a sequence of the one or more packets included in the second burst.

1104 and 1106 are similar to 401 to 403 in the embodiment shown in FIG. 4A-1. For details, refer to the related descriptions in 401 to 403 in the embodiment shown in FIG. 4A-1.

For example, as shown in FIG. 9A, the first burst is the burst B1, and the second burst is the burst A1. It can be learned from FIG. 9A that the second moment is after the first moment. The ingress edge device 231 determines that the burst B1 is mapped to the queue x in the queuing system unit of the ingress edge device 231, and determines that the burst A1 is mapped to the queue x in the queuing system unit of the ingress edge device 231. Because the burst B1 arrives at the ingress edge device 231 before the burst A1, the ingress edge device 231 may first add the burst B1 to the queue x, and then add the burst A1 to the queue x. Details are shown in FIG. 9A.

In other words, after the queue x is started, the ingress edge device 231 first sends one or more packets included in the burst B1 to the network device 232 in a sequence of the one or more packets included in the burst B1. After the one or more packets included in the burst B1 are sent totally, the ingress edge device 231 then sends one or more packets included in the burst A1 to the network device 232 in a sequence of the one or more packets included in the burst B1. In an actual application, a sequence in which the ingress edge device 231 adds the burst A1 and the burst B1 to the queue x may also be not limited. For example, the ingress edge device 231 first adds the one or more packets included in the burst A to the queue x, and then adds the one or more packets included in the burst B1 to the queue x.

For example, as shown in FIG. 10, the first burst is a burst B2, and the second burst is a burst A1. It can be learned from FIG. 10 that the second moment is before the first moment. The ingress edge device 231 determines that the burst A1 is mapped to a queue x+1 in the queuing system unit of the ingress edge device 231, and determines that the burst B2 is mapped to the queue x+1 in the queuing system unit of the ingress edge device 231. Because the burst A1 arrives at the ingress edge device 231 before the burst B2, the ingress edge device 231 may first add one or more packets included in the burst A1 to the queue x+1 in priority in a sequence of the packets, and then add one or more packets included in the first burst B2 in a sequence of the packets. Details are shown in FIG. 10. In an actual application, a sequence in which the ingress edge device 231 adds the burst A1 and the burst B2 to the queue x+1 may not be limited. For example, the ingress edge device 231 may first add the one or more packets included in the burst B1 to the queue x+1, and then add the one or more packets included in the burst A1 to the queue x+1.

Optionally, the one or more packets included in the second burst that are added to the first target queue further each include a queue group number used to indicate a second queue group to which a queue to which the one or more packets included in the second burst that are added by the egress edge device 235 belongs; or the second packet added to the first target queue includes the queue group number of the second queue group.

A priority of the first queue group in 1103 is higher than a priority of the second queue group.

For example, a priority of the first data flow is higher than a priority of the second data flow, and the priority of the first queue group is higher than the priority of the second queue group. Therefore, data of the first data flow may be transmitted by using a queue in the first queue group, and the second data flow may be transmitted by using a queue in the second queue group.

Specifically, the ingress edge device 231 determines, based on a second mapping relationship, the second queue group corresponding to the second data flow, and adds the queue group number of the second queue group to each packet in the second burst or the first packet in the second burst. The second mapping relationship includes a mapping relationship between the queue group in the queuing system unit of the egress edge device 2 and a data flow.

1107: The ingress edge device 231 sends the one or more packets included in the first burst and the one or more packets included in the second burst to the network device 232 according to a scheduling rule of the first target queue.

It should be noted that a sum of a quantity of bits of the first burst and a quantity of bits of the second burst is less than or equal to a quantity of bits that can be accommodated by the first target queue.

The quantity of bits that can be accommodated by the first target queue is equal to a product obtained by multiplying a port rate of the ingress edge device 231 by a time interval between a start moment of the first target queue and an end moment of the first target queue.

For example, as shown in FIG. 9A, the burst B1 corresponds to the first data flow, and the burst A1 corresponds to the second data flow. A sum of a quantity of bits of the burst B1 and a quantity of bits of the burst A1 needs to be less than a quantity of bits that can be transmitted by the ingress edge device 231 in the time interval between the start moment of the first target queue and the end moment of the first target queue.

1108: The network device 232 sends the one or more packets included in the first burst and the one or more packets included in the second burst to the network device 233.

1109: The network device 233 sends the one or more packets included in the first burst and the one or more packets included in the second burst to the network device 234.

1110: The network device 234 sends the one or more packets included in the first burst and the one or more packets included in the second burst to the egress edge device 235.

1107 to 1110 are similar to 404 to 407 in the embodiment shown in FIG. 4A-1. For details, refer to the related descriptions in 404 to 407 in the embodiment shown in FIG. 4A-1.

It should be noted that, if the one or more packets included in the first burst that are sent by the ingress edge device 231 each include the queue group number used to indicate the first queue group to which the queue to which the one or more packets included in the first burst that are added by the egress edge device 235 belongs, and the one or more packets included in the second burst each include the queue group number used to indicate the second queue group to which the queue to which the one or more packets included in the second burst that are added by the egress edge device 235 belongs, when intermediate nodes (the network device 232, the network device 233, and the network device 234) transmit the first burst and the second burst, each of the one or more packets included in the first burst includes the queue group number used to indicate the first queue group to which the queue to which the one or more packets included in the first burst that are added by the egress edge device 235 belongs, and each of the one or more packets included in the second burst includes the queue group number used to indicate the second queue group to which the queue to which the one or more packets included in the second burst that are added by the egress edge device 235 belongs.

If the first packet sent by the ingress edge device 231 includes a queue group number used to indicate a first queue group to which a queue to which the one or more packets included in the first burst that are added by the egress edge device 235 belongs, and the second packet includes a queue group number used to indicate a second queue group to which a queue to which the one or more packets included in the second burst that are added by the egress edge device 235 belongs, when intermediate nodes (the network device 232, the network device 233, and the network device 234) transmit the first burst and the second burst, the first packet includes the queue group number used to indicate the first queue group to which the queue to which the one or more packets included in the first burst that are added by the egress edge device 235 belongs, and the second packet includes the queue group number used to indicate the second queue group to which the queue to which the one or more packets included in the second burst that are added by the egress edge device 235 belongs.

1111: The egress edge device 235 determines the first queue group from the queuing system unit of the egress edge device 235.

The following shows two possible implementations in which the egress edge device 235 determines the first queue group.

1. The egress edge device 235 receives the one or more packets included in the first burst sent by the network device 234. The one or more packets included in the first burst each include the queue group number of the first queue group, or the first packet includes the queue group number of the first queue group. The egress edge device 235 determines the first queue group from the queuing system unit of the egress edge device 235 based on the queue group number.

2. The egress edge device 235 determines, from the queuing system unit of the egress edge device 235 based on the second mapping relationship, the first queue group corresponding to the first data flow.

Optionally, the second mapping relationship may be preconfigured in the egress edge device 235, or may be obtained by the egress edge device 235 in a data plane learning manner or a control plane configuration manner. This is not specifically limited in this application.

The egress edge device 235 may identify, by using a 5-tuple of a packet, data flows to which different bursts belong.

1112: The egress edge device 235 determines the second queue group from the queuing system unit of the egress edge device 235.

1112 is similar to 1111. For details, refer to the related description in 1111. Details are not described herein again.

1113: The egress edge device 235 determines a third target queue from the queuing system unit of the egress edge device 235.

1113 is similar to 408 in the embodiment shown in FIG. 4A-2. For details, refer to the related description in 408 in the embodiment shown in FIG. 4A-2.

1114: The egress edge device 235 adds the one or more packets included in the first burst to the third target queue in the first queue group in the sequence of the one or more packets included in the first burst.

1115: The egress edge device 235 adds the one or more packets included in the second burst to the third target queue in the second queue group in the sequence of the one or more packets included in the second burst.

1116: The egress edge device 235 sends the one or more packets included in the first burst according to a scheduling rule of the third target queue in the first queue group.

1117: The egress edge device 235 sends the one or more packets included in the second burst according to a scheduling rule of the third target queue in the second queue group.

The following describes 1116 and 1117 with reference to specific examples. For example, as shown in FIG. 9A, the first burst is the burst B1 of the first data flow, and the second burst is the burst A1 of the second data flow. The queue y in the first queue group and the queue y in the second queue group are simultaneously started. Because the priority of the first queue group is higher than the priority of the second queue group, the egress edge device 235 first sends one or more packets included in a first burst of the queue y in the first queue group. After the egress edge device 235 empties the one or more packets included in the first burst in the queue y in the first queue group, the egress edge device 235 sends one or more packets included in a second burst of the queue y in the second queue group.

In this embodiment, quantities of bits of a plurality of bursts of the first data flow are the same.

For example, as shown in FIG. 10, the first data flow includes a burst B1, a burst B2, a burst B3, and a burst B4. The second data flow includes a burst A1, a burst A2, a burst A3, and a burst A4. The burst B2 falls into a queue y+1 in the first queue group, and the burst A1 falls into a queue y+1 in the second queue group. The burst B3 falls into a queue y+2 in the first queue group, and the burst A2 falls into a queue y+2 in the second queue group. The burst B4 falls into a queue y+3 in the first queue group, and the burst A3 falls into a queue y+3 in the second queue group.

To ensure a deterministic latency of a packet in the second data flow and enable end-to-end jitter of the packet in the second data flow in network devices in a network to be zero, the following condition 1 needs to be met: A time interval between a moment at which a 1st packet in the burst A1 leaves the egress edge device 235 and a moment at which a 1st packet in the burst A2 leaves the egress edge device 235 is equal to a time interval between a moment at which the 1st packet in the burst A2 leaves the egress edge device 235 and a moment at which a 1st packet in the burst A3 leaves the egress edge device 235.

However, a port rate of the egress edge device 235 is constant. Therefore, quantities of bits included in the burst B1, the burst B2, the burst B3, and the burst B4 of the first data flow need to be the same. This can ensure that duration 1, duration 2, duration 3, and duration 4 are all equal, to meet the foregoing condition 1. The duration 1 is sending duration occupied when the ingress edge device 231 sends the burst B1 from the queue y in the first queue group. The duration 2 is sending duration occupied when the ingress edge device 231 sends the burst B2 from the queue y+1 in the first queue group. The duration 3 is sending duration occupied when the ingress edge device 231 sends the burst B3 from the queue y+2 in the first queue group. The duration 4 is sending duration occupied when the ingress edge device 231 sends the burst B4 from the queue y+3 in the first queue group. Therefore, the quantities of bits of the plurality of bursts of the first data flow are the same.

In this embodiment of this application, it can be learned from the embodiment shown in FIG. 11A to FIG. 11C that when both the first burst of the first data flow and the second burst of the second data flow are mapped to the third target queue of the egress edge device 235, the egress edge device 235 can select a corresponding queue group for each data flow, and each queue group corresponds to one priority. Then, the egress edge device 235 processes the selected corresponding queue group for each data flow by using a scheduling rule of the selected corresponding queue group for each data flow, to implement a deterministic latency and zero end-to-end jitter of packets in different data flows in the network devices in the network.

The ingress edge device 231 may receive a plurality of data flows. A time interval at which two adjacent bursts in each of the plurality of data flows arrive at the ingress edge device 231 is equal to a time interval between start moments at which the two adjacent bursts are respectively mapped to target queues in the egress edge device 235.

Optionally, packets included in N bursts are added to the first target queue, the first target queue includes the first burst and the second burst, each of the N bursts corresponds to one data flow, different bursts in the N bursts correspond to different data flows, a quantity of bits of the N bursts is less than a quantity of bits that can be accommodated by the first target queue, and N is an integer greater than or equal to 2.

The quantity of bits that can be accommodated by the first target queue is equal to the product obtained by multiplying the port rate of the ingress edge device 231 by the time interval between the start moment of the first target queue and the end moment of the first target queue.

Quantities of bits of a plurality of bursts included in each of the N data flows corresponding to the N bursts are the same. For a specific description of a principle, refer to the related description of a setting principle in which the quantities of bits of the plurality of bursts included in the first data flow are the same in the embodiment shown in FIG. 11A to FIG. 11C.

In the egress edge device 235, the packets included in the N bursts are added to the third target queue, each of the N bursts corresponds to one data flow, and different bursts in the N bursts correspond to different data flows. The N bursts correspond to N queue groups, each of the N queue groups corresponds to one priority, and different queue groups in the N queue groups correspond to different priorities.

For example, as shown in FIG. 12, the first target queue is a queue x+1 of the ingress edge device 231. Three bursts are added to the first target queue: a burst A1, a burst B2, and a burst C1. The burst B2 corresponds to a first data flow, the burst A1 corresponds to a second data flow, and the burst C1 corresponds to a third data flow. A sum of a quantity of bits of the burst A1, a quantity of bits of the burst B2, and a quantity of bits of the burst C1 is less than or equal to a quantity of bits transmitted by the ingress edge device 231 in a first time interval (namely, a time interval between a start moment of the queue x+1 and an end moment of the queue x+1).

A priority of the first data flow is higher than a priority of the second data flow, and the priority of the second data flow is higher than a priority of the third data flow. A priority of a first queue group is higher than a priority of a second queue group, and the priority of the second queue group is higher than a priority of a third queue group. Therefore, the egress edge device 235 maps the burst B2 to a queue y+1 in the first queue group, and sends one or more packets included in the burst B2 according to a scheduling rule of the queue y+1 in the first queue group. The egress edge device 235 maps the burst A1 to a queue y+1 in the second queue group, and sends one or more packets included in the burst A1 according to a scheduling rule of the queue y+1 in the second queue group. The egress edge device 235 maps the burst C1 to a queue y+1 in the third queue group, and sends one or more packets included in the burst C1 according to a scheduling rule of the queue y+1 in the third queue group.

FIG. 13 is a schematic flowchart of the packet processing method provided in embodiments of this application.

1301: A first network device receives a first packet from a network at a first moment.

The first packet is a 1st packet in a first burst of a first data flow, the first burst is one of a plurality of bursts included in the first data flow received by the first network device, the first burst includes one or more packets, and the first network device is a first-hop network device that processes one or more packets included in the first data flow.

1302: The first network device determines, based on the first moment, a first target queue from a plurality of queues included in a first queuing system of the first network device.

First time intervals between start moments of two adjacent queues of the plurality of queues included in the first queuing system are equal. Second time intervals at which two adjacent bursts of the plurality of bursts included in the first data flow arrive at the first network device are equal, and the second time interval is an integral multiple of the first time interval.

In some embodiments, quantities of bits of the plurality of bursts included in the first data flow are the same. Sizes of the packets included in the first burst are the same.

1303: The first network device adds the one or more packets included in the first burst to the first target queue in a sequence of the one or more packets included in the first burst.

In some embodiments, the one or more packets included in the first burst each include queue information of the first target queue; or the first packet includes queue information of the first target queue.

In some embodiments, each of the one or more packets included in the first burst includes first time information of each packet, the first time information indicates first remaining processing duration for each packet, and the first remaining processing duration for each packet is a difference between a first theoretical upper limit of duration for each packet and first actual duration for each packet.

The first theoretical upper limit of duration for each packet is a theoretical upper limit when each packet passes through network devices from a first reference moment to a second reference moment. The first reference moment is a reference moment at which the first network device releases each packet to the first queuing system, or the first reference moment is a moment at which the first network device receives each packet. The second reference moment is a reference moment at which each packet enters a queuing system of a second network device that processes each packet. The first reference moment may be referred to as a reference moment at which each packet is in the first network device, and the second reference moment may be referred to as a reference moment at which each packet is in the second network device that processes each packet.

The first actual duration for each packet is actual duration when each packet passes through the first network device from the first reference moment at which each packet is in the first network device to a moment at which each packet is output from the first network device.

Optionally, the first time information of each packet includes the reference moment at which each packet is in the first network device, the moment at which each packet is output from the first network device, and the first theoretical upper limit of duration for each packet.

In some embodiments, the first packet includes first time information of the first packet. The first time information of the first packet indicates first remaining processing duration for the first packet. The first remaining processing duration for the first packet is a difference between a first theoretical upper limit of duration for the first packet and first actual duration for the first packet.

The first theoretical upper limit of duration for the first packet is a theoretical upper limit when the first packet passes through network devices from a first reference moment to a second reference moment. The first reference moment is a reference moment at which the first network device releases the first packet to the first queuing system, or the first reference moment is a moment at which the first network device receives the first packet. The second reference moment is a reference moment at which the first packet enters the queuing system of the second network device that processes the first packet. The first reference moment may be referred to as a reference moment at which the first packet is in the first network device, and the second reference moment may be referred to as a reference moment at which the first packet is in the second network device that processes the first packet.

The first actual duration for the first packet is actual duration when the first packet passes through the first network device from the first reference moment at which the first packet is in the first network device to a moment at which the first packet is output from the first network device.

Optionally, the first time information of the first packet includes the first reference moment at which the first packet is in the first network device, the moment at which the first packet is output from the first network device, and the first theoretical upper limit of duration for the first packet.

1304: The first network device processes the first target queue according to scheduling rules of the plurality of queues included in the first queuing system.

In some embodiments, FIG. 13 further includes steps 1304a to 1304d.

1304a: The first network device receives a second packet from the network at a second moment.

The second packet is a 1st packet in a second burst of a second data flow, the second burst is one of a plurality of bursts included in the second data flow received by the first network device, and the second burst includes one or more packets.

Third time intervals at which two adjacent bursts of the plurality of bursts included in the second data flow arrive at the first network device are equal, and the third time interval is an integral multiple of the first time interval.

1304b: The first network device determines, based on the second moment, a second target queue from the plurality of queues included in the first queuing system.

1304c: The first network device adds the one or more packets included in the second burst to the second target queue in a sequence of the one or more packets included in the second burst.

1304d: The first network device processes the second target queue according to the scheduling rules of the plurality of queues included in the first queuing system.

In some embodiments, packets included in N bursts are added to the first target queue, the N bursts include the first burst, each of the N bursts corresponds to one data flow, different bursts in the N bursts correspond to different data flows, and quantities of bits of the N bursts are less than a quantity of bits that can be accommodated by the first target queue. The quantity of bits that can be accommodated by the first target queue is equal to a product obtained by multiplying a port rate of the first network device by a time interval between a start moment of the first target queue and an end moment of the first target queue.

The foregoing steps 1301 to 1304 show a process of processing the first burst of the first data flow by the first network device. Processes of processing other bursts of the first data flow are similar, and are not described one by one herein.

It should be noted that the first network device is the first-hop network device that processes the first data flow. The first data flow passes through the first network device, then passes through an intermediate node device, and finally is transmitted to a last-hop network device that processes the first data flow, that is, the second network device. For a processing process in which the first data flow passes through the intermediate node device, refer to the related descriptions in the embodiment shown in FIG. 4A-1 to FIG. 4A-3. The following describes a process of processing the first data flow by the last-hop network device with reference to steps 1305 to 1308.

1305: The second network device receives the first data flow.

The first data flow includes one or more bursts, a first burst of the bursts includes one or more packets, a third burst of the bursts includes one or more packets, and the first burst and the third burst are two adjacent bursts in the first data flow. The second network device is a last-hop network device that processes one or more packets included in the first data flow.

1306: The second network device determines a third target queue and a fourth target queue from a second queuing system of the second network device.

A sixth time interval between start moments of two adjacent queues in the second queuing system is equal to the first time interval, and the first time interval is the time interval between the start moments of two adjacent queues of the plurality of queues included in the first queuing system.

The third target queue and the fourth target queue are two adjacent or non-adjacent queues.

A time interval between a moment at which the second network device releases the one or more packets included in the first burst to the first queuing system and a moment at which the second network device releases the one or more packets included in the third burst to the first queuing system is a fourth time interval.

A time interval between a start moment of the third target queue and a start moment of the fourth target queue is a fifth time interval. The fourth time interval is equal to the fifth time interval, the fifth time interval is equal to the second time interval, and the second time interval is a time interval at which two adjacent bursts of the plurality of bursts included in the first data flow arrive at the first network device.

In some embodiments, that the second network device determines a third target queue from a second queuing system of the second network device includes: The second network device determines the first target queue, where the first target queue is a queue to which the one or more packets included in the first burst in the first network device are added. Then, the second network device determines, from the second queuing system based on a first mapping relationship, the third target queue corresponding to the first target queue, where the first mapping relationship includes a mapping relationship between the queue in the first queuing system of the first network device and the queue in the second queuing system.

In some embodiments, a 1st packet in the first burst includes queue information of the first target queue. That the second network device determines the first target queue includes: The second network device determines the first target queue based on the queue information of the first target queue.

1307: The second network device adds the one or more packets included in the first burst to the third target queue in a sequence of the one or more packets included in the first burst, and adds the one or more packets included in the third burst to the fourth target queue in a sequence of the one or more packets included in the third burst.

1308: The second network device processes the third target queue and the fourth target queue according to a scheduling rule of the third target queue and a scheduling rule of the fourth target queue.

In some embodiments, quantities of bits of the bursts included in the first data flow are the same. Sizes of the packets included in the first burst are the same.

In some embodiments, packets included in N bursts are added to the third target queue, the N bursts include the first burst, each of the N bursts corresponds to one data flow, and different bursts in the N bursts correspond to different data flows. The N bursts correspond to N queue groups, each of the N queue groups corresponds to one priority, and priorities of different queue groups are different.

In some embodiments, the foregoing steps 1305 to 1308 are replaced with steps 1309 to 1312.

1309: The second network device receives the second data flow.

The second data flow includes one or more bursts, the second burst of the bursts includes one or more packets, and a moment at which the second data flow arrives at the second network device is later than a moment at which a 1st burst of the first data flow arrives at the second network device, and is earlier than a moment at which a last burst of the first data flow arrives at the second network device.

1310: The second network device selects a first queue group from a second queuing system, and adds one or more bursts included in the first data flow to the first queue group in a sequence of the one or more bursts included in the first data flow.

1311: The second network device selects a second queue group from the second queuing system, and adds the one or more bursts included in the second data flow to the second queue group in a sequence of the one or more bursts included in the second data flow

A priority of the first queue group is higher than a priority of the second queue group.

1312: The second network device processes the first queue group and the second queue group according to scheduling rules of a plurality of queues in the second queuing system.

In some embodiments, quantities of bits of the bursts included in the first data flow are the same. Sizes of the packets included in the first burst are the same.

FIG. 14 is a schematic structural block diagram of a first network device according to an embodiment of this application. The first network device 1400 shown in FIG. 14 includes a receiving unit 1401, a processing unit 1402, and a sending unit 1403.

The receiving unit 1401 is configured to receive a first packet from a network at a first moment, where the first packet is a 1st packet in a first burst of a first data flow, the first burst is one of a plurality of bursts included in the first data flow received by the first network device, the first burst includes one or more packets, and the first network device is a first-hop network device that processes one or more packets included in the first data flow.

The processing unit 1402 is configured to: determine, based on the first moment, a first target queue from a plurality of queues included in a first queuing system; and add the one or more packets included in the first burst to the first target queue in a sequence of the one or more packets included in the first burst.

The sending unit 1403 is configured to process the first target queue according to scheduling rules of the plurality of queues.

In a possible implementation, first time intervals between start moments of two adjacent queues of the plurality of queues included in the first queuing system are equal.

In another possible implementation, second time intervals at which two adjacent bursts of the plurality of bursts included in the first data flow arrive at the first network device are equal, and the second time interval is an integral multiple of the first time interval.

In another possible implementation, quantities of bits of the plurality of bursts included in the first data flow are the same.

In another possible implementation, sizes of the packets included in the first burst are the same.

In another possible implementation, the receiving unit 1401 is further configured to:

receive a second packet from the network at a second moment, where the second packet is a 1st packet in a second burst of a second data flow, the second burst is one of a plurality of bursts included in the second data flow received by the first network device, and the second burst includes one or more packets.

The processing unit 1402 is further configured to:

determine, based on the second moment, a second target queue from the plurality of queues included in the first queuing system.

The second target queue is the first target queue, or the second target queue is after the first target queue; and the first target queue is a last queue of the first queuing system, or the first target queue is before a last queue of the first queuing system.

In another possible implementation, third time intervals at which two adjacent bursts of the plurality of bursts included in the second data flow arrive at the first network device are equal, and the third time interval is an integral multiple of the first time interval.

In another possible implementation, packets included in N bursts are added to the first target queue, the N bursts include the first burst, each of the N bursts corresponds to one data flow, different bursts in the N bursts correspond to different data flows, and quantities of bits of the N bursts are less than a quantity of bits that can be accommodated by the first target queue. The quantity of bits that can be accommodated by the first target queue is equal to a product obtained by multiplying a port rate of the first network device by a time interval between a start moment of the first target queue and an end moment of the first target queue.

In another possible implementation, the first packet includes queue information of the first target queue; or the one or more packets included in the first burst each include queue information of the first target queue.

In another possible implementation, the queue information of the first target queue includes a queue number of the first target queue.

In another possible implementation, the one or more packets included in the first burst each further include a number of a queue group to which a queue used to indicate a second network device to join the one or more packets included in the first burst belongs, and the second network device is a last-hop network device that processes the one or more packets included in the first data flow.

In another possible implementation, each of the one or more packets included in the first burst includes first time information of each packet, the first time information indicates first remaining processing duration for each packet, the first remaining processing duration is a difference between a first theoretical upper limit of duration for processing each packet by the first network device and first actual duration. The first theoretical upper limit of duration is a theoretical upper limit of duration when each packet passes through the network devices from a first reference moment to a second reference moment. The first reference moment is a reference moment at which the first network device releases each packet to the first queuing system, or the first reference moment is a moment at which the first network device receives each packet. The second reference moment is a reference moment at which each packet enters a queuing system of the second network device that processes the one or more packets included in the first burst. The first actual duration is actual duration when each packet passes through the first network device from the first reference moment to a moment at which each packet is output from the first network device.

In another possible implementation, the first time information includes a first reference moment of each packet and a moment at which each packet is output from the first network device.

In another possible implementation, the first time information further includes a first theoretical upper limit of duration for each packet.

In another possible implementation, the first packet includes first time information of the first packet, the first time information indicates first remaining processing duration for the first packet, the first remaining processing duration is a difference between a first theoretical upper limit of duration for processing the first packet by the first network device and first actual duration. The first theoretical upper limit of duration is a theoretical upper limit of duration when the first packet passes through the network devices from a first reference moment to a second reference moment. The first reference moment is a reference moment at which the first network device releases the first packet to the first queuing system, and the second reference moment is a reference moment at which the first packet enters a queuing system of the second network device that processes the one or more packets included in the first burst.

In another possible implementation, the first time information includes a first reference moment of the first packet and a moment at which the first packet is output from the first network device.

In another possible implementation, the first time information further includes a first theoretical upper limit of duration for the first packet.

FIG. 15 is a schematic structural block diagram of a second network device according to an embodiment of this application. The second network device 1500 shown in FIG. 15 includes a receiving unit 1501, a processing unit 1502, and a sending unit 1503.

The receiving unit 1501 is configured to receive a first data flow, where the first data flow includes one or more bursts, a first burst of the bursts includes one or more packets, a third burst of the bursts includes one or more packets, the first burst and the third burst are two adjacent bursts in the first data flow, and the second network device is a last-hop network device that processes one or more packets included in the first data flow.

The processing unit 1502 is configured to: determine a third target queue and a fourth target queue from a second queuing system of the second network device; add the one or more packets included in the first burst to the third target queue in a sequence of the one or more packets included in the first burst; and add the one or more packets included in the third burst to the fourth target queue in a sequence of the one or more packets included in the third burst.

The sending unit 1503 is configured to process the third target queue and the fourth target queue according to a scheduling rule of the third target queue and a scheduling rule of the fourth target queue.

In a possible implementation, the third target queue and the fourth target queue are two adjacent or nonadjacent queues in the second queuing system.

In another possible implementation, a time interval between a moment at which the second network device releases the one or more packets included in the first burst to the second queuing system and a moment at which the second network device releases the one or more packets included in the third burst to the second queuing system is a fourth time interval, a time interval between a start moment of the third target queue and a start moment of the fourth target queue is a fifth time interval, and the fourth time interval is equal to the fifth time interval.

In another possible implementation, the receiving unit 1501 is further configured to:

receive a second data flow, where the second data flow includes one or more bursts, a second burst of the bursts includes one or more packets, and a moment at which the second data flow arrives at the second network device is later than a moment at which a 1st burst of the first data flow arrives at the second network device, and is earlier than a moment at which a last burst of the first data flow arrives at the second network device.

The processing unit 1502 is further configured to:

select a first queue group from the second queuing system, and add the one or more bursts included in the first data flow to the first queue group in a sequence of the one or more bursts included in the first data flow; and select a second queue group from the second queuing system, and add the one or more bursts included in the second data flow to the second queue group in a sequence of the one or more bursts included in the second data flow, where a priority of the first queue group is higher than a priority of the second queue group.

The sending unit 1503 is further configured to:

process the first queue group and the second queue group according to scheduling rules of a plurality of queues in the second queuing system.

In another possible implementation, the processing unit 1502 is specifically configured to:

determine a first target queue, where the first target queue is a queue to which the one or more packets included in the first burst in a first network device are added, and the first network device is a first-hop network device that processes the one or more packets included in the first data flow; and
determine, from the second queuing system based on a first mapping relationship, the third target queue corresponding to the first target queue, where the first mapping relationship includes a mapping relationship between a queue in a first queuing system of the first network device and a queue in the second queuing system.

In another possible implementation, a 1st packet in the first burst includes queue information of the first target queue. The processing unit is specifically configured to:

determine the first target queue based on the queue information of the first target queue.

In another possible implementation, packets included in N bursts are added to the third target queue, the N bursts include the first burst, each of the N bursts corresponds to one data flow, and different bursts in the N bursts correspond to different data flows. The N bursts correspond to N queue groups, each of the N queue groups corresponds to one priority, and priorities of different queue groups are different.

In another possible implementation, quantities of bits of the bursts included in the first data flow are the same.

In another possible implementation, sizes of the packets included in the first burst are the same.

An embodiment of this application further provides a processing apparatus, including a processor and an interface. The processor may be configured to perform the methods in the foregoing method embodiments.

It should be understood that the processing apparatus may be a chip. For example, the processing apparatus may be a field-programmable gate array (field-programmable gate array, FPGA), an application-specific integrated circuit (application-specific integrated circuit, ASIC), a system on chip (system on chip, SoC), a central processing unit (central processor unit, CPU), a network processor (network processor, NP), a digital signal processing circuit (digital signal processor, DSP), a micro controller unit (micro controller unit, MCU), a programmable controller (programmable logic device, PLD), another programmable logic device, a discrete gate or transistor logic device, a discrete hardware component, or another integrated chip.

In an implementation process, the steps of the foregoing methods may be implemented by using an integrated logic circuit of hardware, an instruction in a form of software, or program code in the processor. The steps of the methods disclosed with reference to embodiments of this application may be directly performed and accomplished by a hardware processor, or may be performed and accomplished by using a combination of hardware and a software module in the processor. The software module may be located in a mature storage medium in the art, such as a random access memory, a flash memory, a read-only memory, a programmable read-only memory, an electrically erasable programmable memory, or a register. The storage medium is located in a memory, and the processor reads information in the memory and completes the steps of the foregoing methods in combination with the hardware of the processor. To avoid repetition, details are not described herein again.

It should be noted that, the processor in this embodiment of this application may be an integrated circuit chip, and has a signal processing capability. In an implementation process, the steps in the foregoing method embodiments may be implemented by using an integrated logic circuit of hardware, an instruction in a form of software, or program code in the processor. A general-purpose processor may be a microprocessor, or the processor may alternatively be any conventional processor or the like. The steps of the methods disclosed with reference to embodiments of this application may be directly performed and accomplished by a hardware decoding processor, or may be performed and accomplished by using a combination of hardware and a software module in the decoding processor. The software module may be located in a mature storage medium in the art, such as a random access memory, a flash memory, a read-only memory, a programmable read-only memory, an electrically erasable programmable memory, or a register. The storage medium is located in a memory, and the processor reads information in the memory and completes the steps of the foregoing methods in combination with the hardware of the processor.

It may be understood that the memory in this embodiment of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the systems and methods described in this specification includes but is not limited to these memories and any memory of another proper type.

According to the methods provided in embodiments of this application, this application further provides a network system. FIG. 16 is a schematic diagram of a network system according to an embodiment of this application. The network system includes the first network device shown in FIG. 14 and the second network device shown in FIG. 15. The first network device shown in FIG. 14 is configured to perform some or all of the steps performed by the first network device in the foregoing method embodiments. The second network device shown in FIG. 15 is configured to perform some or all of the steps performed by the second network device in the foregoing method embodiments.

According to the methods provided in embodiments of this application, this application further provides a computer program product. The computer program product includes computer program code. When the computer program code is run on a computer, the computer is enabled to perform the method in any one of the foregoing embodiments.

According to the methods provided in embodiments of this application, this application further provides a computer-readable medium. The computer-readable medium stores program code. When the program code is run on a computer, the computer is enabled to perform the method in any one of the foregoing embodiments.

A person of ordinary skill in the art may be aware that units and algorithm steps in the examples described with reference to embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing systems, apparatuses, and units, refer to a corresponding process in the foregoing method embodiments. Details are not described herein again.

In the several embodiments provided in this application, it should be understood that the disclosed systems, apparatuses, and methods may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate components may or may not be physically separate, and components displayed as units may or may not be physical units. To be specific, the components may be located at one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on this understanding, the technical solutions of this application essentially, or a part contributing to the conventional technology, or some of the technical solutions may be implemented in a form of a software product. The software product is stored in a storage medium, and includes a plurality of instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A packet processing method, wherein the method comprises:

   receiving, by a first network device, a first packet from a network at a first moment, wherein the first packet is a 1st packet in a first burst of a first data flow, the first burst is one of a plurality of bursts comprised in the first data flow received by the first network device, the first burst comprises one or more packets, and the first network device is a first-hop network device that processes one or more packets comprised in the first data flow;
   determining, by the first network device based on the first moment, a first target queue from a plurality of queues comprised in a first queuing system of the first network device;
   adding, by the first network device, the one or more packets comprised in the first burst to the first target queue in a sequence of the one or more packets comprised in the first burst; and
   processing, by the first network device, the first target queue according to scheduling rules of the plurality of queues.

2. The method according to claim 1, wherein first time intervals between start moments of two adjacent queues of the plurality of queues comprised in the first queuing system are equal.

3. The method according to claim 1 or 2, wherein second time intervals at which two adjacent bursts of the plurality of bursts comprised in the first data flow arrive at the first network device are equal, and the second time interval is an integral multiple of the first time interval.

4. The method according to any one of claims 1 to 3, wherein quantities of bits of the plurality of bursts comprised in the first data flow are the same.

5. The method according to any one of claims 1 to 4, wherein the method further comprises:

receiving, by the first network device, a second packet from the network at a second moment, wherein the second packet is a 1st packet in a second burst of a second data flow, the second burst is one of a plurality of bursts comprised in the second data flow received by the first network device, and the second burst comprises one or more packets; and
determining, by the first network device based on the second moment, a second target queue from the plurality of queues comprised in the first queuing system, wherein
the second target queue is the first target queue, or the second target queue is after the first target queue; and
the first target queue is a last queue of the first queuing system, or the first target queue is before a last queue of the first queuing system.

6. The method according to claim 5, wherein third time intervals at which two adjacent bursts of the plurality of bursts comprised in the second data flow arrive at the first network device are equal, and the third time interval is an integral multiple of the first time interval.

7. A packet processing method, wherein the method comprises:

receiving, by a second network device, a first data flow, wherein the first data flow comprises one or more bursts, a first burst of the bursts comprises one or more packets, a third burst of the bursts comprises one or more packets, the first burst and the third burst are two adjacent bursts in the first data flow, and the second network device is a last-hop network device that processes one or more packets comprised in the first data flow;
determining, by the second network device, a third target queue and a fourth target queue from a second queuing system of the second network device;
adding, by the second network device, the one or more packets comprised in the first burst to the third target queue in a sequence of the one or more packets comprised in the first burst;
adding, by the second network device, the one or more packets comprised in the third burst to the fourth target queue in a sequence of the one or more packets comprised in the third burst; and
processing, by the second network device, the third target queue and the fourth target queue according to a scheduling rule of the third target queue and a scheduling rule of the fourth target queue.

8. The method according to claim 7, wherein a time interval between a moment at which the second network device releases the one or more packets comprised in the first burst to the second queuing system and a moment at which the second network device releases the one or more packets comprised in the third burst to the second queuing system is a fourth time interval, a time interval between a start moment of the third target queue and a start moment of the fourth target queue is a fifth time interval, and the fourth time interval is equal to the fifth time interval.

9. The method according to claim 7 or 8, wherein the method further comprises:

receiving, by the second network device, a second data flow, wherein the second data flow comprises one or more bursts, a second burst of the bursts comprises one or more packets, and a moment at which the second data flow arrives at the second network device is later than a moment at which a 1st burst of the first data flow arrives at the second network device, and is earlier than a moment at which a last burst of the first data flow arrives at the second network device;
selecting, by the second network device, a first queue group from the second queuing system, and adding the one or more bursts comprised in the first data flow to the first queue group in a sequence of the one or more bursts comprised in the first data flow;
selecting, by the second network device, a second queue group from the second queuing system, and adding the one or more bursts comprised in the second data flow to the second queue group in a sequence of the one or more bursts comprised in the second data flow, wherein
a priority of the first queue group is higher than a priority of the second queue group; and

processing, by the second network device, the first queue group and the second queue group according to scheduling rules of a plurality of queues in the second queuing system.

10. The method according to any one of claims 7 to 9, wherein the determining, by the second network device, a third target queue from a second queuing system of the second network device comprises:

determining, by the second network device, a first target queue, wherein the first target queue is a queue to which the one or more packets comprised in the first burst in a first network device are added, and the first network device is a first-hop network device that processes the one or more packets comprised in the first data flow; and
determining, by the second network device from the second queuing system based on a first mapping relationship, the third target queue corresponding to the first target queue, wherein the first mapping relationship comprises a mapping relationship between a queue in a first queuing system of the first network device and a queue in the second queuing system.

11. The method according to any one of claims 7 to 10, wherein packets comprised in N bursts are added to the third target queue, the N bursts comprise the first burst, each of the N bursts corresponds to one data flow, and different bursts in the N bursts correspond to different data flows; and
the N bursts correspond to N queue groups, each of the N queue groups corresponds to one priority, and priorities of different queue groups are different.

12. The method according to any one of claims 7 to 11, wherein quantities of bits of the bursts comprised in the first data flow are the same.

13. A first network device, wherein the first network device comprises:

a receiving unit, configured to receive a first packet from a network at a first moment, wherein the first packet is a 1st packet in a first burst of a first data flow, the first burst is one of a plurality of bursts comprised in the first data flow received by the first network device, the first burst comprises one or more packets, and the first network device is a first-hop network device that processes one or more packets comprised in the first data flow;
a processing unit, configured to: determine, based on the first moment, a first target queue from a plurality of queues comprised in a first queuing system of the first network device; and add the one or more packets comprised in the first burst to the first target queue in a sequence of the one or more packets comprised in the first burst; and
a sending unit, configured to process the first target queue according to scheduling rules of the plurality of queues.

14. The first network device according to claim 13, wherein first time intervals between start moments of two adjacent queues of the plurality of queues comprised in the first queuing system are equal.

15. The first network device according to claim 13 or 14, wherein the first time intervals between the start moments of two adjacent queues of the plurality of queues comprised in the first queuing system are equal.

16. The first network device according to any one of claims 13 to 15, wherein quantities of bits of the plurality of bursts comprised in the first data flow are the same.

17. The first network device according to any one of claims 13 to 16, wherein the receiving unit is further configured to:

receive a second packet from the network at a second moment, wherein the second packet is a 1st packet in a second burst of a second data flow, the second burst is one of a plurality of bursts comprised in the second data flow received by the first network device, and the second burst comprises one or more packets; and
the processing unit is configured to determine, based on the second moment, a second target queue from the plurality of queues comprised in the first queuing system, wherein the second target queue is the first target queue, or the second target queue is after the first target queue; and the first target queue is a last queue of the first queuing system, or the first target queue is before a last queue of the first queuing system.

18. The first network device according to claim 17, wherein third time intervals at which two adjacent bursts of the plurality of bursts comprised in the second data flow arrive at the first network device are equal, and the third time interval is an integral multiple of the first time interval.

**19.** A second network device, wherein the second network device comprises:

a receiving unit, configured to receive a first data flow, wherein the first data flow comprises one or more bursts, a first burst of the bursts comprises one or more packets, a third burst of the bursts comprises one or more packets, the first burst and the third burst are two adjacent bursts in the first data flow, and the second network device is a last-hop network device that processes one or more packets comprised in the first data flow; a processing unit, configured to: determine a third target queue and a fourth target queue from a second queuing system of the second network device; add the one or more packets comprised in the first burst to the third target queue in a sequence of the one or more packets comprised in the first burst; and add the one or more packets comprised in the third burst to the fourth target queue in a sequence of the one or more packets comprised in the third burst; and a sending unit, configured to process the third target queue and the fourth target queue according to a scheduling rule of the third target queue and a scheduling rule of the fourth target queue.

**20.** The second network device according to claim 19, wherein a time interval between a moment at which the second network device releases the one or more packets comprised in the first burst to the second queuing system and a moment at which the second network device releases the one or more packets comprised in the third burst to the second queuing system is a fourth time interval, a time interval between a start moment of the third target queue and a start moment of the fourth target queue is a fifth time interval, and the fourth time interval is equal to the fifth time interval.

**21.** The second network device according to claim 19 or 20, wherein the receiving unit is further configured to:

receive a second data flow, wherein the second data flow comprises one or more bursts, a second burst of the bursts comprises one or more packets, and a moment at which the second data flow arrives at the second network device is later than a moment at which a 1st burst of the first data flow arrives at the second network device, and is earlier than a moment at which a last burst of the first data flow arrives at the second network device; the processing unit is further configured to:

select a first queue group from the second queuing system, and add the one or more bursts comprised in the first data flow to the first queue group in a sequence of the one or more bursts comprised in the first data flow; and select a second queue group from the second queuing system, and add the one or more bursts comprised in the second data flow to the second queue group in a sequence of the one or more bursts comprised in the second data flow, wherein a priority of the first queue group is higher than a priority of the second queue group; and the sending unit is further configured to: process the first queue group and the second queue group according to scheduling rules of a plurality of queues in the second queuing system.

**22.** The second network device according to any one of claims 19 to 21, wherein the processing unit is specifically configured to:

determine a first target queue, wherein the first target queue is a queue to which the one or more packets comprised in the first burst in a first network device are added, and the first network device is a first-hop network device that processes the one or more packets comprised in the first data flow; and determine, from the second queuing system based on a first mapping relationship, the third target queue corresponding to the first target queue, wherein the first mapping relationship comprises a mapping relationship between a queue in a first queuing system of the first network device and a queue in the second queuing system.

**23.** The second network device according to any one of claims 19 to 22, wherein packets comprised in N bursts are added to the third target queue, the N bursts comprise the first burst, each of the N bursts corresponds to one data flow, and different bursts in the N bursts correspond to different data flows; and the N bursts correspond to N queue groups, each of the N queue groups corresponds to one priority, and priorities of different queue groups are different.

**24.** The second network device according to any one of claims 19 to 23, wherein quantities of bits of the bursts comprised in the first data flow are the same.

25. A network device, wherein the network device comprises a processor, configured to execute a program stored in a memory, and when the program is executed, the network device is enabled to perform the method according to any one of claims 1 to 6, or the network device is enabled to perform the method according to any one of claims 7 to 12.

26. The network device according to claim 25, wherein the memory is located outside the network device.

27. A computer-readable storage medium, comprising computer instructions, wherein when the computer instructions are run on a computer, the method according to any one of claims 1 to 6 is performed, or the method according to any one of claims 7 to 12 is performed.

28. A network device, wherein the network device comprises a processor, a memory, and computer instructions that are stored in the memory and that can be run on the processor, and when the computer instructions are run, the network device is enabled to perform the method according to any one of claims 1 to 6, or the network device is enabled to perform the method according to any one of claims 7 to 12.

Node 101          Node 102

◫ Packets in a flow 1
⊞ Packets in a flow 2
◫ Packets in a flow 3
▦ Packets in a flow 4

FIG. 1

FIG. 2

FIG. 3A

FIG. 3B

| Ingress edge device 231 | Network device 232 | Network device 233 | Network device 234 | Egress edge device 235 |

401: Receive a first packet at a first moment

402: Determine, based on the first moment, a first target queue from a plurality of queues included in a queuing system unit of the ingress edge device 231

403: Add one or more packets included in a first burst to the first target queue in a sequence of the one or more packets included in the first burst

404: Send the one or more packets included in the first burst (the first packet includes first time information) according to a scheduling rule of the first target queue

405: The one or more packets included in the first burst (the first packet includes second time information)

406: The one or more packets included in the first burst (the first packet includes third time information)

407: The one or more packets included in the first burst

TO FIG. 4A-2    TO FIG. 4A-2    TO FIG. 4A-2    TO FIG. 4A-2    TO FIG. 4A-2

FIG. 4A-1

CONT. FROM FIG. 4A-1

CONT. FROM FIG. 4A-1

CONT. FROM FIG. 4A-1

CONT. FROM FIG. 4A-1

CONT. FROM FIG. 4A-1

408: Determine a third target queue from a queue system unit of the egress edge device 235

409: Add the one or more packets included in the first burst to the third target queue in the sequence of the one or more packets included in the first burst

410: Send the one or more packets included in the first burst according to a scheduling rule of the third target queue

411: Receive a third packet at a third moment

412: Determine, based on the third moment, a fifth target queue from the plurality of queues included in the queuing system unit of the ingress edge device 231

413: Add one or more packets included in a third burst to the fifth target queue in a sequence of the one or more packets included in the third burst

TO FIG. 4A-3

TO FIG. 4A-3

TO FIG. 4A-3

TO FIG. 4A-3

TO FIG. 4A-3

FIG. 4A-2

CONT. FROM FIG. 4A-2

CONT. FROM FIG. 4A-2

CONT. FROM FIG. 4A-2

CONT. FROM FIG. 4A-2

CONT. FROM FIG. 4A-2

414: Send the one or more packets included in the third burst (the third packet includes fourth time information) according to a scheduling rule of the fifth target queue

415: The one or more packets included in the third burst (the third packet includes fifth time information)

416: The one or more packets included in the third burst (the third packet includes sixth time information)

417: The one or more packets included in the third burst

418: Determine a fourth target queue from the queue system unit of the egress edge device 235

419: Add the one or more packets included in the first burst to the fourth target queue in the sequence of the one or more packets included in the first burst

420: Send the one or more packets included in the first burst according to a scheduling rule of the fourth target queue

FIG. 4A-3

```
┌─────────────────────┐
│   Network device    │
│        232          │
└─────────────────────┘
           │
┌─────────────────────────────────────────────────┐
│ 405a: Determine a sixth target queue from a      │
│ queuing system unit of the network device 232    │
│ based on first time information of a first packet │
└─────────────────────────────────────────────────┘
           │
┌─────────────────────────────────────────────────┐
│ 405b: Add one or more packets included in a      │
│ first burst to the sixth target queue in a       │
│ sequence of the one or more packets included in  │
│ the first burst                                   │
└─────────────────────────────────────────────────┘
           │
┌─────────────────────────────────────────────────┐
│ 405c: Send the one or more packets included in   │
│ the first burst to a network device 233 according│
│ to a scheduling rule of the sixth target queue   │
└─────────────────────────────────────────────────┘
           │
```

FIG. 4B

```
┌─────────────────────┐
│   Network device    │
│        232          │
└─────────────────────┘
           │
┌─────────────────────────────────────────────────┐
│ 405d: Determine a sixth target queue from a      │
│ queuing system unit of the network device 232    │
│ based on first time information of a first packet │
└─────────────────────────────────────────────────┘
           │
┌─────────────────────────────────────────────────┐
│ 405e: Add the first packet to the sixth target   │
│ queue                                             │
└─────────────────────────────────────────────────┘
           │
┌─────────────────────────────────────────────────┐
│ 405f: Send the first packet to a network device  │
│ 233 according to a scheduling rule of the sixth   │
│ target queue                                      │
└─────────────────────────────────────────────────┘
           │
```

FIG. 4C

Second time interval | Second time interval

Corresponding $E^1$ at which a packet arrives at a first-hop network device

B1    B2    B3    B4

First moment    Third moment First time interval    First time interval

Queues to which a plurality of bursts of a first data flow are respectively added in the first-hop network device

x    x+1    x+2    x+3

B1    B2    B3    B4

Time axis

Start moment of the queue x    Start moment of the queue x+1

Fourth time interval

Corresponding $E^h$ at which the packet arrives at a last-hop network device

B1    B2    B3    B4

Fifth time interval

Queues to which the plurality of bursts of the first data flow are respectively added in the last-hop network device

y    y+1    y+2    y+3

B1    B2    B3    B4

Time axis

Start moment of the queue y    Start moment of the queue y+1

FIG. 5A

EP 4 239 975 A1

Second time interval

Corresponding $E^1$ at which a packet arrives at a first-hop network device

| B1 | B2 | B3 | B4 |

First moment

Queues to which a plurality of bursts of a first data flow are respectively added in the first-hop network device

First time interval

x    x+1    x+2    x+3

| B1 | B2 | B3 |

Time axis

Start moment of the queue x

Start moment of the queue x+1

Fourth time interval

Corresponding $E^h$ at which the packet arrives at a last-hop network device

| B1 | B2 | B3 | B4 |

Queues to which the plurality of bursts of the first data flow are respectively added in the last-hop network device

Fifth time interval

y    y+1    y+2    y+3

| B1 | B2 | B3 |

Time axis

Start moment of the queue y

Start moment of the queue y+1

FIG. 5B

Second time interval

Corresponding $E^1$ at which a packet arrives at a first-hop network device

B1

B2

First moment
T11

Third moment
T21

First time interval

Queues to which a plurality of bursts of a first data flow are respectively added in the first-hop network device

x

x+1

x+2

x+3

B1

B2

Time axis

Start moment of
the queue x

Start moment of
the queue x+1

Fourth time interval

Corresponding $E^h$ at which the packet arrives at a last-hop network device

B1

B2

T13

Fifth time interval

T31

Queues to which the plurality of bursts of the first data flow are respectively added in the last-hop network device

Sixth time interval

y

y+1

y+2

y+3

B1

B2

Time axis

Start moment of
the queue y
T12

Start moment of
the queue y+1

T22

FIG. 5C

Ingress edge device 231       Network device 232

$D^1_{max}$

$E^1$ or $t^1_{in}$     $t^1_{out}$     $t^2_{in}$     $t'^2_{in}$   $E^2$     $t^2_{out}$

| | |
|---|---|
| Q | Queuing system unit |
| D | Active delay unit |
| S | Scheduling unit |

Input/Output port

Switching fabric

FIG. 6

EP 4 239 975 A1

Network device 232    Network device 233

| Q | Queuing system unit |   | Input/ Output port |
| D | Active delay unit |   | Switching fabric |
| S | Scheduling unit |   |   |

$D^2_{max}$

$t^2_{in}$    $t'^2_{in}$   $E^2$    $t^2_{out}$    $t^3_{in}$    $t'^3_{in}$   $E^3$    $t^3_{out}$

FIG. 7

EP 4 239 975 A1

Ingress edge device 231  Network device 232  Network device 233  Network device 234  Egress edge device 235

$D^1_{max}$  $D^2_{max}$  $D^3_{max}$  $D^4_{max}$  $D^h$

Q  Queuing system unit        Switching fabric

D  Active delay unit

S  Scheduling unit

FIG. 8

EP 4 239 975 A1

Second moment

Third time interval

Corresponding
$E^1$ at which a
packet arrives at
a first-hop
network device

Second time interval

| B1 | A1 | | B2 | A2 | | B3 | A3 | | B4 | A4 |

Queues to which
a plurality of
bursts of a first
data flow are
respectively
added in the
first-hop
network device

First
moment

x                    x+1                  x+2                  x+3

| B1 | A1 | | B2 | A2 | | B3 | A3 | | B4 | A4 |

Time axis

Start moment of
the queue x

Start moment of
the queue x+1

T1

T2

Corresponding
$E^h$ at which the
packet arrives at
a last-hop
network device

| B1 | A1 | | B2 | A2 | | B3 | A3 | | B4 | A4 |

First queue
group

y              y+1              y+2              y+3

| B1 | | B2 | | B3 | | B4 |

Queues to which
the plurality of
bursts of the first
data flow are
respectively
added in the last-
hop network
device

Time axis

Fifth time interval

Second queue
group

y                y+1               y+2               y+3

| A1 | | A2 | | A3 | | A4 |

Time axis

Fifth time interval

FIG. 9A

FIG. 9B

EP 4 239 975 A1

EP 4 239 975 A1

Corresponding $E^1$ at which a packet arrives at a first-hop network device

Second time interval

B1　　A1　B2　　A2　B3　　A3　B4

First moment　　Third moment

First time interval

Queues to which a plurality of bursts of a first data flow are respectively added in the first-hop network device

x　B1　x+1　A1　B2　x+2　A2　B3　x+3　A3　B4

Time axis

Start moment of the queue x

Start moment of the queue x+1

Corresponding $E^h$ at which the packet arrives at a last-hop network device

Third time interval

B1　　A1　B2　　A2　B3　　A3　B4

Fourth time interval

Queues to which the plurality of bursts of the first data flow are respectively added in the last-hop network device

First queue group

y　B1　y+1　B2　y+2　B3　y+3　B4

Time axis

Fifth time interval　Duration 2　Duration 3　Duration 4

Duration 1

Second queue group

y　y+1　A1　y+2　A2　y+3　A3

Time axis

FIG. 10

| Ingress edge device 231 | Network device 232 | Network device 233 | Network device 234 | Egress edge device 235 |

1101: Receive a first packet at a first moment

1102: Determine, based on the first moment, a first target queue from a plurality of queues included in a queuing system unit of the ingress edge device 231

1103: Add one or more packets included in a first burst to the first target queue in a sequence of the one or more packets included in the first burst

1104: Receive a second packet at a second moment

1105: Determine, based on the first moment, the first target queue from the plurality of queues included in a queuing system unit of the ingress edge device 231

1106: Add one or more packets included in a second burst to the first target queue in a sequence of the one or more packets included in the second burst

TO FIG. 11B  TO FIG. 11B  TO FIG. 11B  TO FIG. 11B  TO FIG. 11B

FIG. 11A

CONT. FROM FIG. 11A CONT. FROM FIG. 11A CONT. FROM FIG. 11A CONT. FROM FIG. 11A CONT. FROM FIG. 11A

1107: Send the one or more packets included in the first burst and the one or more packets in the second burst according to a scheduling rule of the first target queue

1108: The one or more packets included in the first burst and one or more packets included in the second burst

1109: The one or more packets included in the first burst and one or more packets included in the second burst

1110: The one or more packets included in the first burst and one or more packets included in the second burst

1111: Determine a first queue group from a queuing system unit of the egress edge device 235

1112: Determine a second queue group from the queuing system unit of the egress edge device 235

1113: Determine a third target queue from the queue system unit of the egress edge device 235

TO FIG. 11C    TO FIG. 11C    TO FIG. 11C    TO FIG. 11C    TO FIG. 11C

FIG. 11B

CONT.
FROM
FIG. 11B

CONT.
FROM
FIG. 11B

CONT.
FROM
FIG. 11B

CONT.
FROM
FIG. 11B

CONT.
FROM
FIG. 11B

1114: Add the one or more packets included in the first burst to a third target queue in the first queue group in the sequence of the one or more packets included in the first burst

1115: Add the one or more packets included in the second burst to a third target queue in the second queue group in the sequence of the one or more packets included in the second burst

1116: Send the one or more packets included in the first burst based on a second target queue in the first queue group

1117: Send the one or more packets included in the second burst based on a second target queue in the second queue group

FIG. 11C

Corresponding $E^1$ at which a packet arrives at a first-hop network device

| B1 | | C1 | A1 | B2 | | C2 | A2 | B3 | | C3 | A3 | B4 |

Queues to which a plurality of bursts of a first data flow are respectively added in the first-hop network device

x+1         x+2         x+3

| B1 | x | | C1 | A1 | B2 | | C2 | A2 | B3 | | C3 | A3 | B4 |

First time interval

Corresponding $E^h$ at which the packet arrives at a last-hop network device

| B1 | | C1 | A1 | B2 | | C2 | A2 | B3 | | C3 | A3 | B4 |

Queues to which the plurality of bursts of the first data flow are respectively added in the last-hop network device

First queue group

| B1 | y | | B2 | y+1 | | B3 | y+2 | | B4 | y+3 |

Sixth time interval

Second queue group

y | | A1 | y+1 | | A2 | y+2 | | A3 | y+3 |

Third queue group

y | | C1 | y+1 | | C2 | y+2 | | C3 | y+3 |

FIG. 12

```
┌──────────────┐                          ┌──────────────┐
│ First network│                          │Second network│
│   device     │                          │   device     │
└──────┬───────┘                          └──────┬───────┘

1301: Receive a                           1305: First
first packet at a                         data flow
first moment
        ──────────►                               ──────────►

┌──────────────────────────┐            ┌──────────────────────────┐
│1302: Determine, based on │            │1306: Determine a third   │
│the first moment, a first │            │target queue and a fourth │
│target queue from a       │            │target queue from a second│
│plurality of queues       │            │queuing system of the     │
│included in a first       │            │second network device     │
│queuing system            │            └──────────────────────────┘
└──────────────────────────┘

┌──────────────────────────┐            ┌──────────────────────────┐
│1303: Add one or more     │            │1307: Add one or more     │
│packets included in a     │            │packets included in a     │
│first burst to the first  │            │first burst to the third  │
│target queue in a sequence│            │target queue in a sequence│
│of the one or more packets│            │of the one or more packets│
│included in the first     │            │included in the first     │
│burst                     │            │burst, and add one or more│
└──────────────────────────┘            │packets included in a     │
                                         │third burst to the fourth │
                                         │target queue in a sequence│
┌──────────────────────────┐            │of the one or more packets│
│1304: Process the first   │            │included in the third     │
│target queue according to │            │burst                     │
│scheduling rules of the   │            └──────────────────────────┘
│plurality of queues       │
│included in the first     │            ┌──────────────────────────┐
│queuing system            │            │1308: Process the third   │
└──────────────────────────┘            │target queue and the      │
                                         │fourth target queue       │
                                         │according to a scheduling │
                                         │rule of the third target  │
                                         │queue and a scheduling    │
                                         │rule of the fourth        │
                                         │target queue              │
                                         └──────────────────────────┘
```

FIG. 13

First network device
1400

Receiving unit
1401

Processing unit
1402

Sending unit
1403

FIG. 14

Second network device
1500

Receiving unit
1501

Processing unit
1502

Sending unit
1503

FIG. 15

Network system

First network device

Second network device

FIG. 16

**EP 4 239 975 A1**

## INTERNATIONAL SEARCH REPORT

| | International application No. |
|---|---|
| | **PCT/CN2021/130315** |

**A. CLASSIFICATION OF SUBJECT MATTER**

H04L 47/22(2022.01)i; H04L 47/56(2022.01)i

According to International Patent Classification (IPC) or to both national classification and IPC

**B. FIELDS SEARCHED**

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI: 流, 报文, 突发, 抖动, 零, 消除, 队列, 时延, flow, message, burst, jitter, zero, eliminat+, queue, delay

**C. DOCUMENTS CONSIDERED TO BE RELEVANT**

| Category* | Citation of document, with indication, where appropriate, of the relevant passages | Relevant to claim No. |
|---|---|---|
| Y | CN 110086728 A (HUAWEI TECHNOLOGIES CO., LTD.) 02 August 2019 (2019-08-02) description paragraphs [0043]-[0169] | 1, 4, 5, 7, 9, 11-13, 16, 17, 19, 21, 23-28 |
| Y | CN 108259383 A (BEIJING HUAWEI DIGITAL TECHNOLOGY CO., LTD.) 06 July 2018 (2018-07-06) description, paragraphs [0035]-[0085] | 1, 4, 5, 7, 9, 11-13, 16, 17, 19, 21, 23-28 |
| A | CN 1767457 A (HUAWEI TECHNOLOGIES CO., LTD.) 03 May 2006 (2006-05-03) entire document | 1-28 |
| A | CN 1531276 A (HUAWEI TECHNOLOGIES CO., LTD.) 22 September 2004 (2004-09-22) entire document | 1-28 |
| A | US 2003093267 A1 (MICROSOFT CORP.) 15 May 2003 (2003-05-15) entire document | 1-28 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 January 2022** | **27 January 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/130315**

| Patent document cited in search report | | | Publication date (day/month/year) | Patent family member(s) | | | Publication date (day/month/year) |
|---|---|---|---|---|---|---|---|
| CN | 110086728 | A | 02 August 2019 | CN | 110086728 | B | 29 January 2021 |
| CN | 108259383 | A | 06 July 2018 | CN | 108259383 | B | 01 October 2021 |
| CN | 1767457 | A | 03 May 2006 | CN | 100356736 | C | 19 December 2007 |
| CN | 1531276 | A | 22 September 2004 | CN | 100550821 | C | 14 October 2009 |
| US | 2003093267 | A1 | 15 May 2003 | US | 7162418 | B2 | 09 January 2007 |

Form PCT/ISA/210 (patent family annex) (January 2015)

**EP 4 239 975 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011287339